# FASCICULE DE BREVET EUROPEEN

(11) **EP 4 514 117 B1**
(45) Date de publication et mention de la délivrance du brevet: **27.05.2026**
(21) Numéro de dépôt: 23702820.4
(22) Date de dépôt: 03.02.2023
(51) Int. Cl.: A01G 9/14, B66C 7/12, B66C 17/04, B66C 17/06

(54) **SYSTEME DE PORTIQUE ROBOTISE AGRICOLE POUR SERRE MULTI-CHAPELLES**
LANDWIRTSCHAFTLICHES ROBOTISCHES GANTRY-SYSTEM FÜR GEWÄCHSHAUS MIT MEHREREN SPANNWEITEN
AGRICULTURAL ROBOTIC GANTRY SYSTEM FOR MULTISPAN GREENHOUSE

(30) Priorité: 04.02.2022 FR 2201018
(43) Date de publication de la demande: 05.03.2025
(73) Titulaire: Sylvabot, 78860 Saint-Nom-la-Bretèche (FR)
(72) Inventeur: ACOSTA, Norman, 78200 Mantes-la-Jolie (FR); ARGUEDAS, Mikaël, 92140 Clamart (FR); REY, Alexia, 78100 Saint-Germain-en-Laye (FR); LE BLAINVAUX, Olivier, 78150 Le Chesnay (FR)
(74) Mandataire: Gabriel, Franck
(86) Numéro de dépôt international: PCT/EP2023/052734
(87) Numéro de publication internationale: WO 2023/148352

(56) Documents cités:
- WO-A1-2010/107318
- CN-U- 208 998 846
- FR-A1- 2 579 065
- JP-A- H11 299 364
- JP-U- H0 519 280

## Description

### Domaine technique

L'invention concerne le domaine technique des systèmes de portique robotisé agricole. L'invention vise en particulier à fournir un système de portique robotisé agricole pour ferme maraîchère comportant au moins une serre multi-chapelles.

### Technique antérieure

Le brevet US 9,622,398 décrit un portique robotisé comportant une passerelle qui est mis en mouvement par des moyens de propulsion le long d'une pluralité de rangées de cultures, plusieurs outils agricoles couplés à la passerelle, un système d'alimentation électrique des moyens de propulsion, un contrôleur qui supervise le fonctionnement des moyens de propulsion et des outils agricoles, le contrôleur activant un outil agricole en réponse à la détection de conditions environnementales prédéterminées. Le brevet décrit également une méthode et un système informatique pour contrôler le fonctionnement du portique robotisé.

La demande de brevet AT 364659 décrit un portique robotisé comprenant un pont mobile se déplaçant dans le sens longitudinal au moyen de châssis à roues circulant sur des rails, un chariot mobile se déplaçant dans le sens transversalement et conçu comme porte-équipement (équipement pour les semis ou planter les graines ou pour le désherbage des mauvaises herbes). Le porte-équipement comporte un support mobile dans la direction verticale. Une commande automatique, mise en œuvre par ordinateur, contrôle le déplacement du pont et du chariot, ainsi que l'actionnement des équipements pour la plantation des plantes ou le semis des graines et des équipements pour le désherbage.

La demande de brevet JP H11 299364 A décrit un appareil pour transférer un conteneur de culture de plantes dans une travée de serre et entre les travées de serre.

Divers inconvénients résultent de tels portiques robotisés, notamment en ce qui concerne le fonctionnement du portique robotisé et la réalisation de tâches maraîchères dans une serre du type multi-chapelles. D'une part, certains systèmes de l'art antérieur nécessitent que chaque chapelle dispose de son propre portique robotisé ce qui rend le système particulièrement coûteux. D'autre part, certains systèmes de l'art antérieur nécessitent qu'une partie du portique robotisé soit retirée des moyens de guidage généralement fixe dans une chapelle pour être installée dans une autre chapelle, ce qui est particulièrement contraignant à mettre en œuvre, et nécessitent généralement une opération manuelle faisant intervenir un ou plusieurs maraîchers.

Il existe donc un besoin d'offrir un système de portique robotisé qui rende la réalisation des tâches maraîchères dans une serre du type multi-chapelles plus facile à mettre en œuvre, par exemple en réduisant, voire en évitant les inconvénients précités.

### Résumé de l'invention

C'est un objet de l'invention que de proposer un système de portique robotisé de ferme maraîchère qui surmonte un ou plusieurs des inconvénients ou limitations des techniques de portiques robotisés existants.

Selon l'invention, il est proposé un système de portique robotisé agricole comprenant un premier chariot pouvant se déplacer le long de rails longitudinaux selon une direction longitudinale, le premier chariot supportant et guidant latéralement selon une direction transversale un second chariot muni d'un porte-outil pour mettre en œuvre un outil relativement à une surface de culture dans une serre comprenant plusieurs chapelles adjacentes, chaque chapelle supportant deux rails longitudinaux sensiblement horizontaux et en vis-à-vis, lesdites chapelles et lesdits rails longitudinaux s'étendant selon une direction longitudinale. Le système de portique robotisé agricole comporte en outre un mécanisme d'aiguillage inter-chapelle positionné dans une zone de transfert inter-chapelle s'étendant entre les chapelles selon la direction transversale, le mécanisme d'aiguillage inter-chapelle étant agencé de telle sorte que le premier chariot est opérable soit dans une configuration de travail dans laquelle le premier chariot est déplaçable dans une chapelle définie selon la direction longitudinale, soit dans une configuration d'aiguillage dans laquelle le premier chariot est translatable de ladite chapelle définie vers une chapelle de destination selon la direction transversale. Le mécanisme d'aiguillage inter-chapelle comporte :
- des rails transversaux inter-chapelle sensiblement horizontaux, en vis-à-vis et s'étendant selon la direction transversale entre au moins ladite chapelle définie et ladite chapelle de destination ; et
- un chariot d'aiguillage inter-chapelle agencé pour se coupler au premier chariot et translatable dans la zone de transfert inter-chapelle par l'intermédiaire des rails transversaux inter-chapelle.

Les deux rails longitudinaux sont discontinus au niveau de la zone de transfert inter-chapelle de manière à former deux sections interrompues définies de part et d'autre de la zone de transfert inter-chapelle. Le chariot d'aiguillage inter-chapelle peut comporter deux sections de rails de chariot d'aiguillage longitudinaux en vis-à-vis, chacune se positionnant dans la section interrompue associée.

Les rails longitudinaux sensiblement horizontaux et en vis-à-vis peuvent être fixés sur chacun des deux montants verticaux des arches de chaque chapelle à une hauteur définie. Les rails transversaux inter-chapelle peuvent être fixés au-dessus des rails longitudinaux à une hauteur déterminée de telle sorte à permettre le déplacement du premier chariot sur les rails longitudinaux.

Le chariot d'aiguillage inter-chapelle peut comporter un ensemble motorisé de chariot d'aiguillage apte à déplacer le chariot d'aiguillage inter-chapelle sur les rails transversaux inter-chapelle.

L'ensemble motorisé de chariot d'aiguillage peut comporter, de chaque côté du chariot d'aiguillage inter-chapelle selon l'axe transversal, deux platines de liaison à galet pour coupler le chariot d'aiguillage inter-chapelle aux rails transversaux inter-chapelle et le guider lors du déplacement selon la direction transversale.

Chaque rail transversal inter-chapelle peut présenter un profilé s'étendant horizontalement et définissant une cavité présentant une ouverture positionnée dans une paroi en partie basse et sur toute sa longueur, l'ouverture ayant une largeur plus faible que la largeur du profilé afin de ménager dans la paroi en partie basse au moins un épaulement servant de surface d'appui pour les galets de chacune des platines de liaison à galet, lesdites platines de liaison à galet comportant un ensemble de galets internes se déplaçant sur la surface d'appui de l'épaulement dans la cavité du profilé et un ensemble de galets externes se déplaçant sur la surface d'appui de l'épaulement extérieurement en dessous du profilé de telle sorte que le chariot d'aiguillage inter-chapelle soit supporté et guidé lors d'un déplacement selon la direction transversale.

L'ensemble motorisé de chariot d'aiguillage peut comporter au moins une unité servomoteur et réducteur d'aiguillage couplée à des pignons en position distale par des arbres associés, chacun des rails transversaux inter-chapelle étant muni d'une crémaillère de rail transversal, lesdits pignons étant agencés pour s'engrener avec la crémaillère de rail transversal correspondante.

L'ensemble motorisé de chariot d'aiguillage peut comporter deux unités servomoteur et réducteur, l'une d'un côté supporté par la section de rail de chariot d'aiguillage longitudinal, l'autre de l'autre côté supporté par la section de rail de chariot d'aiguillage longitudinal en vis-à-vis, les deux unités servomoteur et réducteur d'aiguillage étant synchronisés.

Les rails longitudinaux, les sections de rails de chariot d'aiguillage longitudinaux, et/ ou les rails transversaux inter-chapelle peuvent être réalisés sous la forme d'un profilé définissant une cavité comportant un ensemble d'alimentation de puissance et de communication de données muni d'au moins une piste conductrice agencée pour coopérer avec au moins un charbon supporté par une unité d'alimentation et de communication du premier chariot, du second chariot et/ou du chariot d'aiguillage inter-chapelle.

Au moins une section de rail de chariot d'aiguillage longitudinal peut comporter un mécanisme de butée escamotable comportant une plaque butée fixée audit rail par un axe de rotation et par un ressort, et un vérin muni d'un doigt lequel coopère avec une pièce basse en saillie de la plaque pour bloquer ou autoriser le déplacement du premier chariot des sections de rails de chariot d'aiguillage longitudinaux vers les rails longitudinaux.

Au moins une section de rail de chariot d'aiguillage longitudinal peut comporter un mécanisme de butée escamotable et de centrage comportant une plaque butée fixée audit rail par un axe de rotation et par un ressort, et un vérin muni d'un doigt lequel coopère, d'une part, avec une pièce basse en saillie de la plaque pour bloquer ou autoriser le déplacement du premier chariot des sections de rails de chariot d'aiguillage longitudinaux vers les rails longitudinaux, et, d'autre part, traversant une glissière liée à la section de rails de chariot d'aiguillage longitudinaux et un logement de centrage lié à la section de rails longitudinaux pour aligner les rails de chariot d'aiguillage longitudinaux et les rails longitudinaux.

Le mécanisme de butée escamotable, respectivement le mécanisme combiné de butée escamotable et de centrage peut comporter une butée d'impact fixée à la section de rails de chariot d'aiguillage longitudinaux par un second axe de rotation et par ledit doigt, la butée d'impact coopérant avec un amortisseur d'impact fixé sur le premier chariot.

Au moins une section de rail de chariot d'aiguillage longitudinal peut comporter un mécanisme d'alignement par translation comportant un axe horizontal reçu dans une pièce glissière, ledit axe et ladite pièce glissière étant couplés ensemble par l'intermédiaire de deux ressorts horizontaux latéraux afin de rendre ledit rail de chariot d'aiguillage longitudinal flottant en translation horizontale relativement au rail longitudinal correspondant lorsque le doigt pénètre dans logement de centrage du mécanisme de butée escamotable et de centrage.

Selon un autre aspect, il est proposé un procédé de fonctionnement d'un système de portique robotisé agricole dans une serre comprenant plusieurs chapelles adjacentes comprenant les étapes :
- diriger un premier chariot d'un portique robotisé vers une zone de transfert inter-chapelle dans une chapelle définie, le premier chariot étant déplaçable selon une direction longitudinale ;
- coupler le premier chariot à un chariot d'aiguillage inter-chapelle dans la zone de transfert inter-chapelle ;
- diriger le chariot d'aiguillage inter-chapelle transportant le premier chariot de la chapelle définie vers une chapelle de destination, le chariot d'aiguillage inter-chapelle étant translatable selon la direction transversale le long de rails transversaux inter-chapelle ;
- stopper le chariot d'aiguillage inter-chapelle dans la chapelle de destination et découpler le premier chariot du chariot d'aiguillage inter-chapelle ; et
- déplacer le premier chariot dans la chapelle de destination pour y effectuer le ou les tâches maraîchères prévues.

L'invention est particulièrement applicable pour des portiques robotisés assurant des interventions variées sur la zone de culture afin d'améliorer la réalisation des tâches maraîchères dans une serre du type multi-chapelles. Le système de portique robotisé selon l'invention possède en outre les avantages suivants :
- Il ne comporte pas de roue ou de chenillette se mouvant directement sur le sol, ou d'installation de rail au sol, permettant en cela de gérer de manière satisfaisante les problématiques de tassement du sol, et libérer la zone au sol pour la circulation et les autres usages ;
- Le système ne nécessite pas de mettre en place des infrastructures complexes ;
- Le système est structurellement léger, compact et simple d'installation, il est donc particulièrement adapté à des serres de fermes maraîchères, la serre comportant une ou plusieurs chapelles, l'exploitation agricole pouvant comporter plusieurs serres ;
- Le système permet un changement automatisé d'une chapelle à une autre, option-nellement d'une serre à une autre, résultant dans un gain de productivité ;
- Le système permet une automatisation des tâches maraîchères les plus longues, pénibles et répétitives afin de concentrer le travail des maraîchers sur des tâches à plus forte valeur ajoutée.

D'autres avantages ressortiront de la description ci-après de l'invention.

### Brève description des dessins

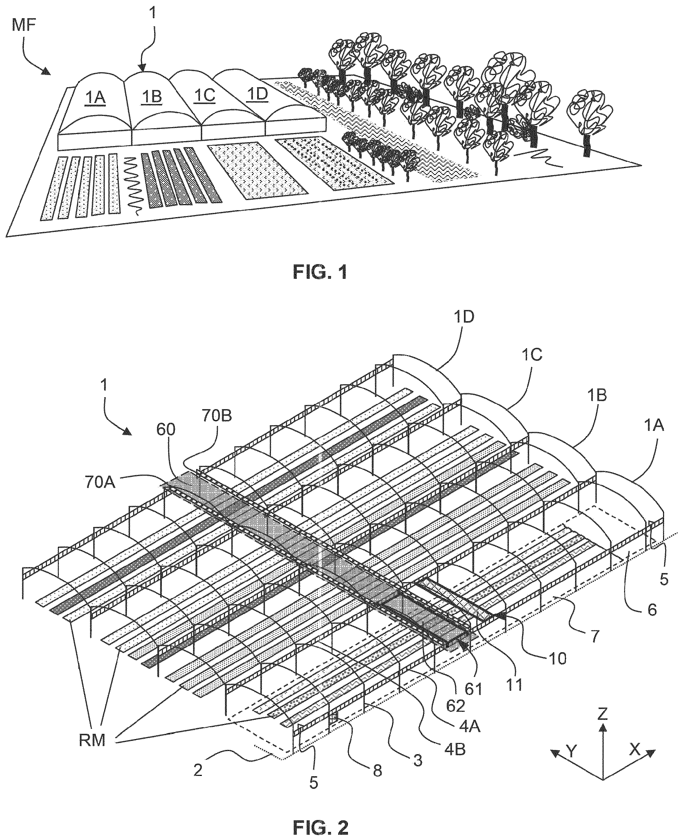

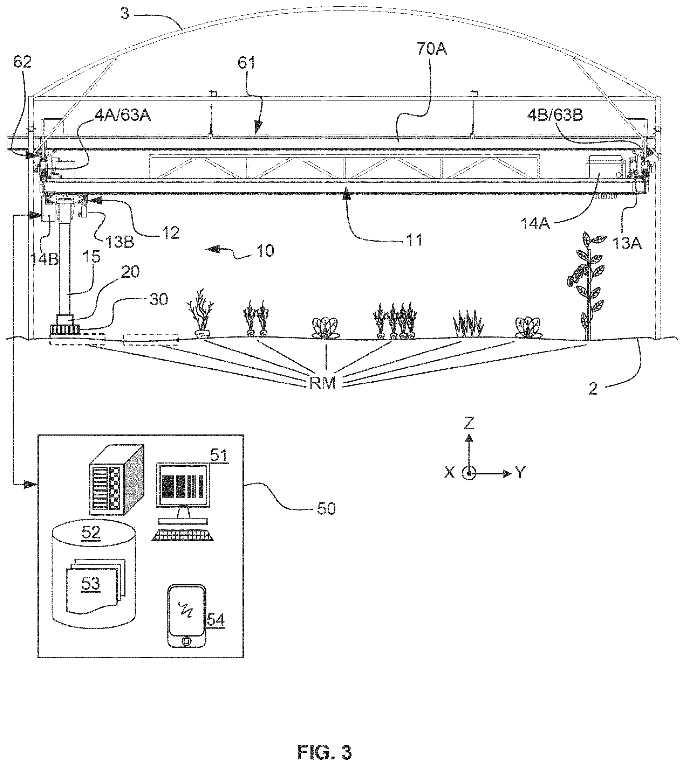

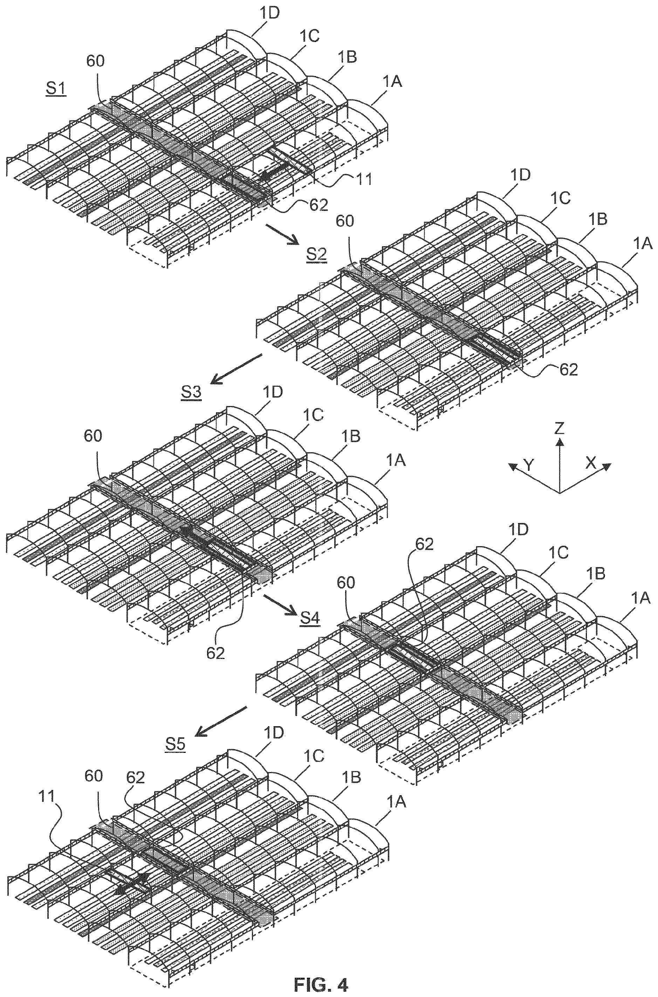

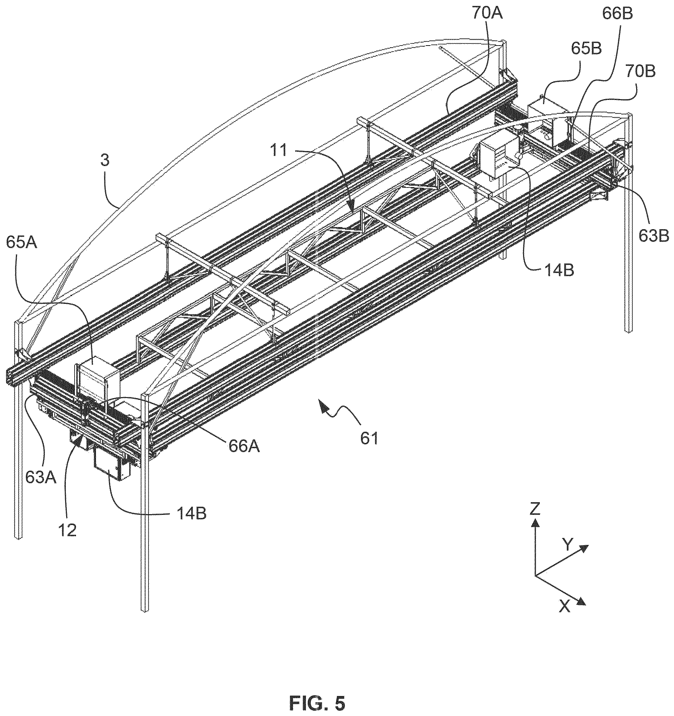

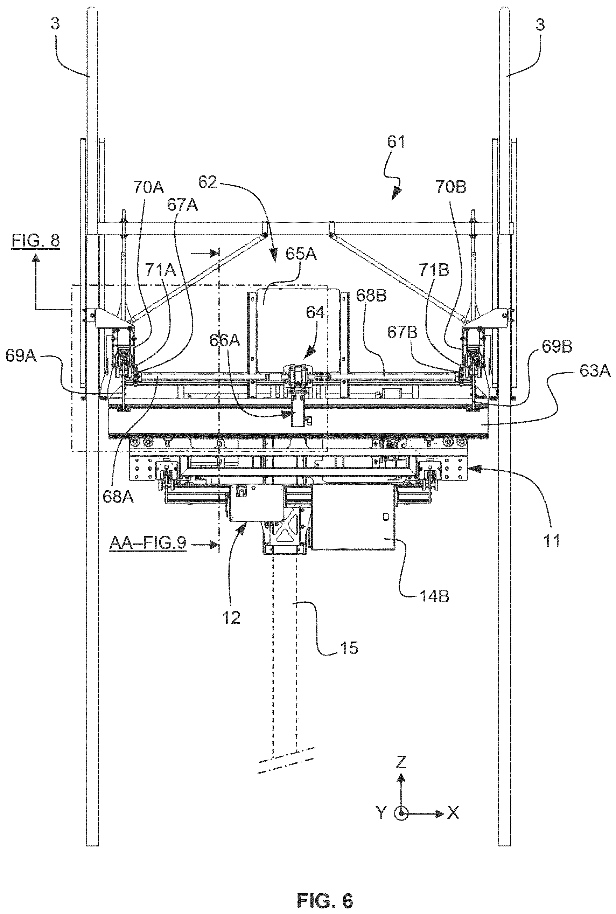

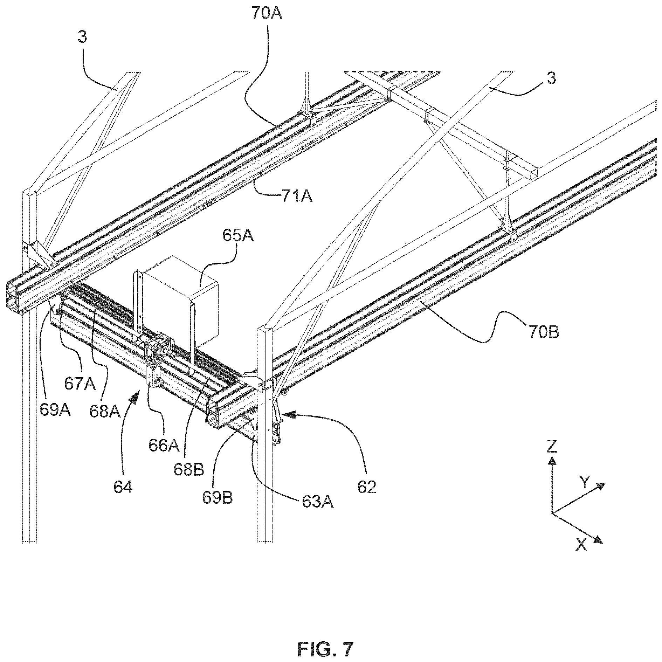

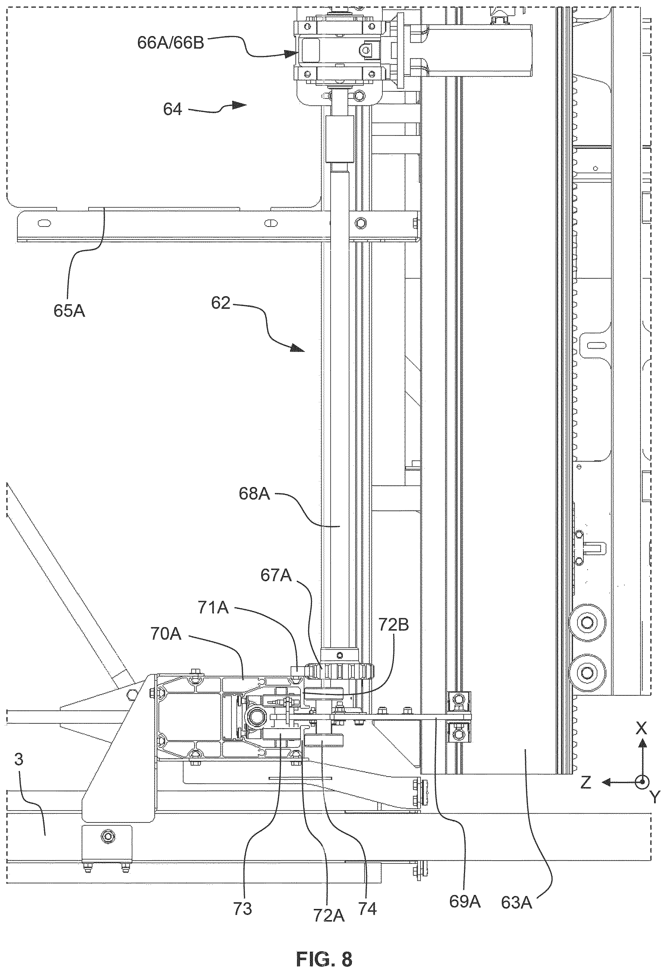

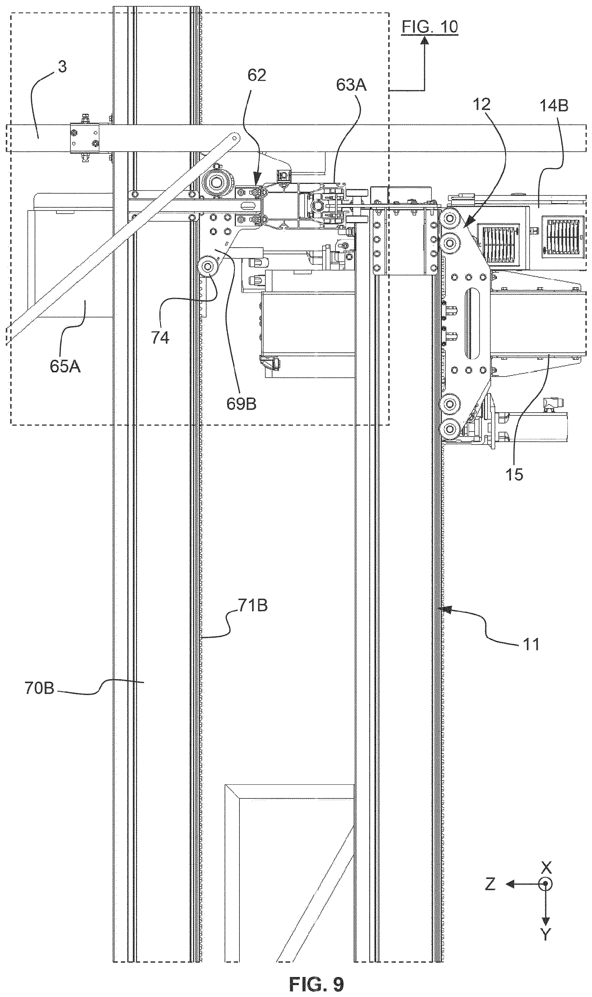

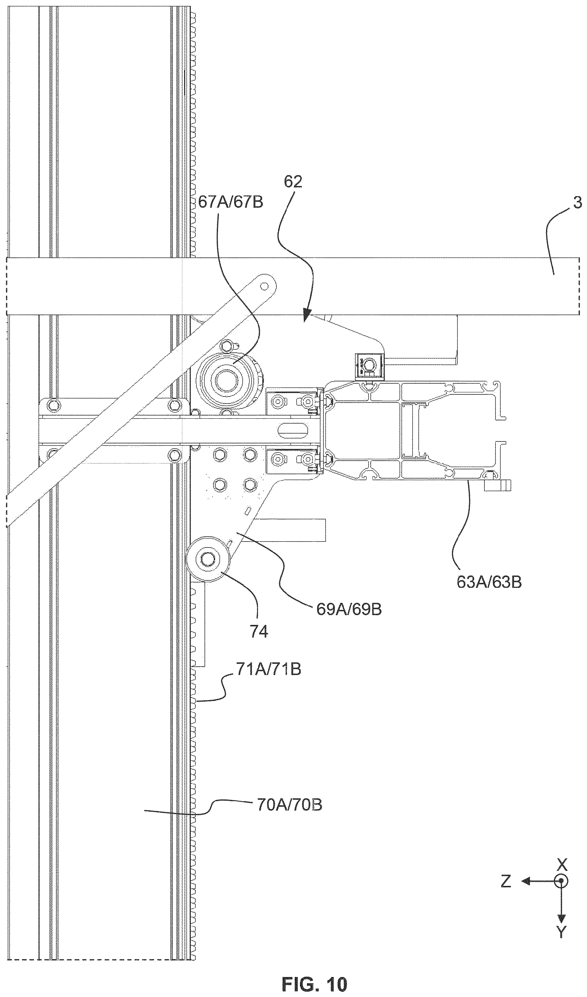

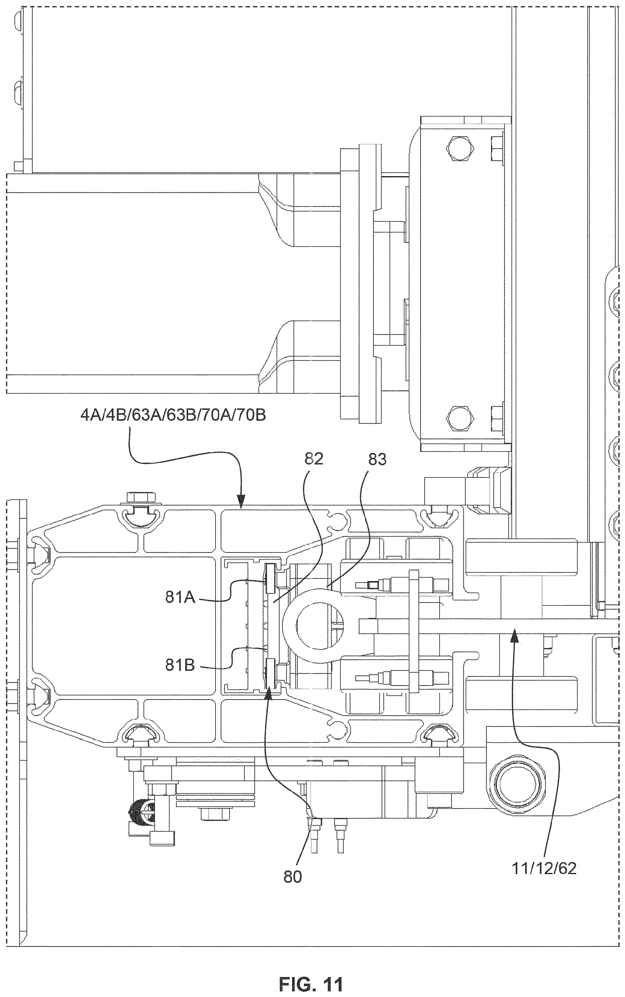

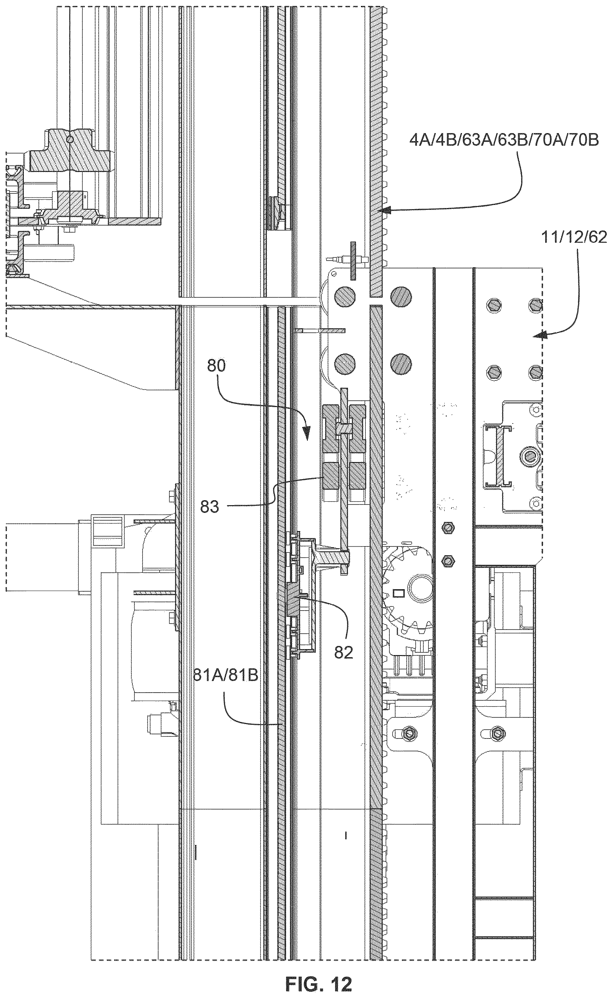

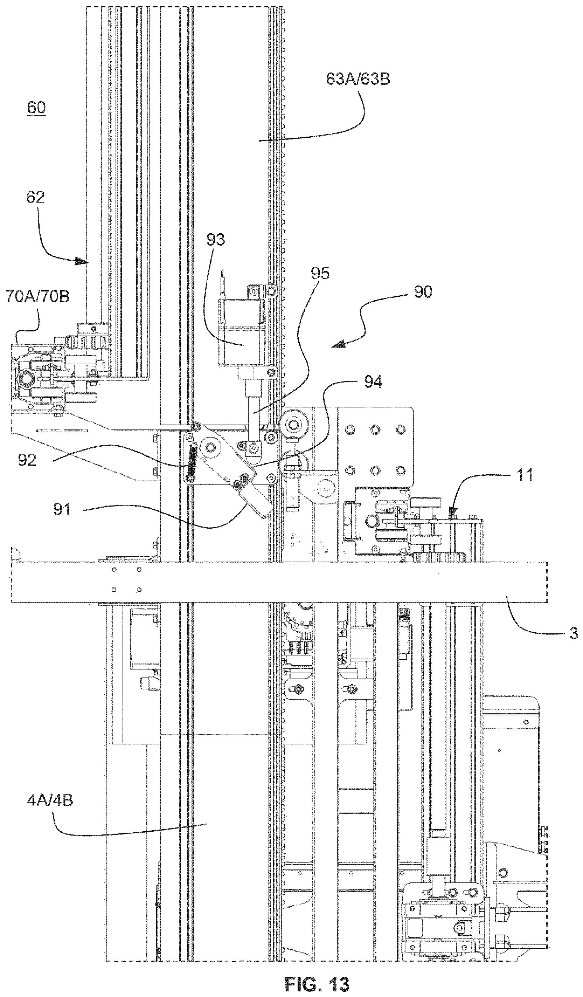

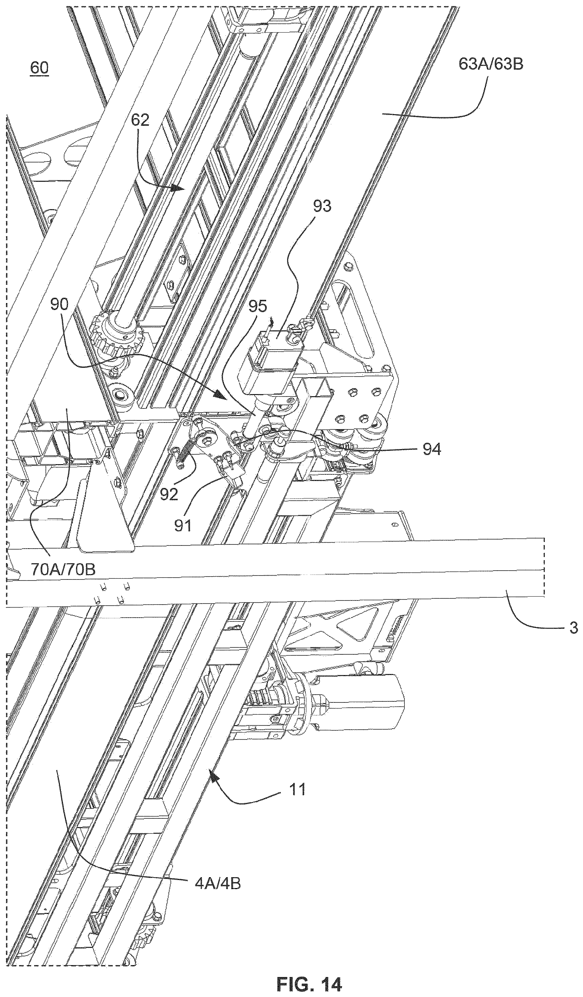

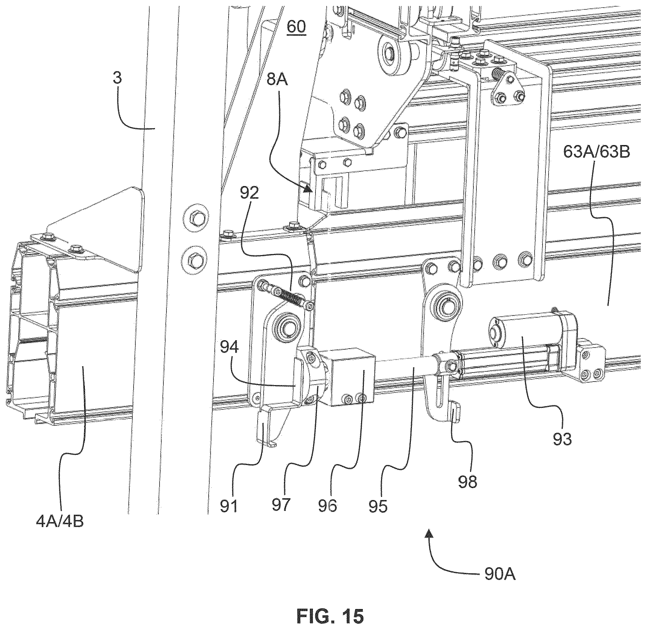

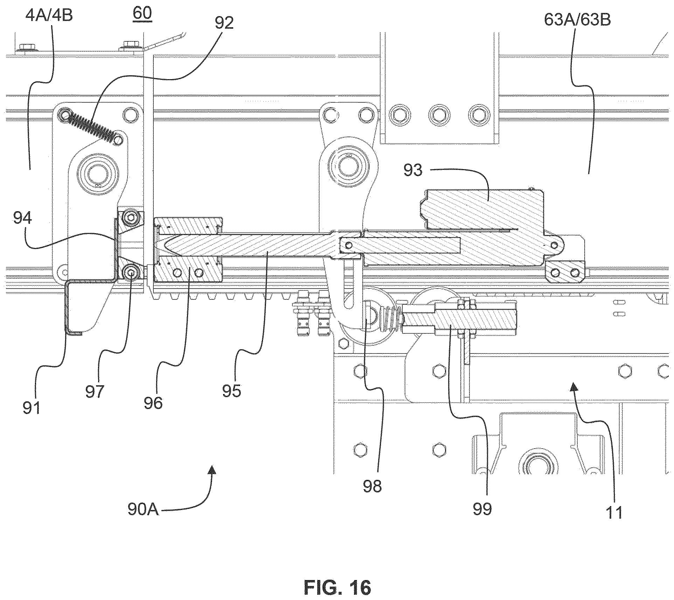

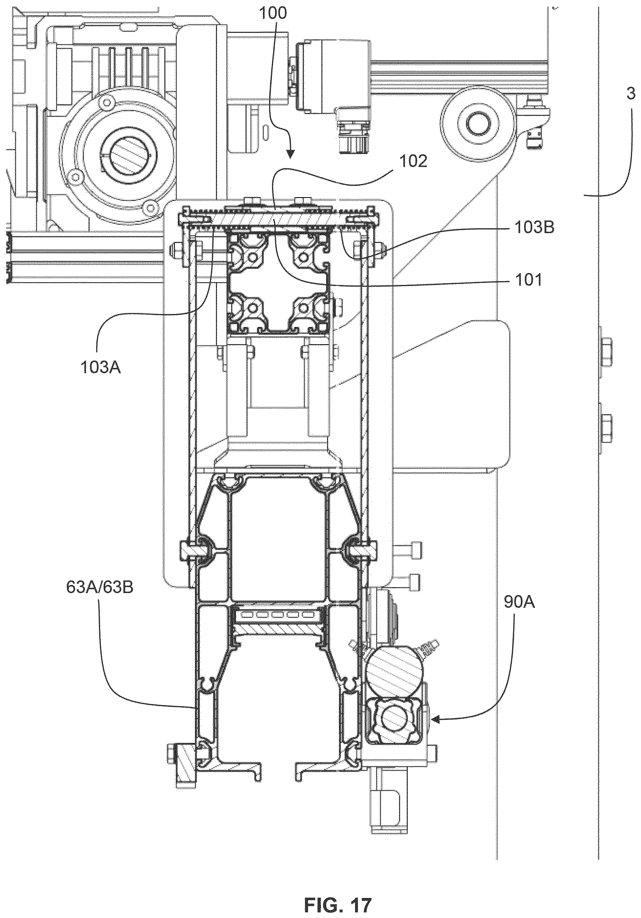

La présente invention est illustrée par des exemples et non limitée aux dessins annexés, dans lesquels des références similaires indiquent des éléments similaires :
● La Figure [Fig.1] est une vue en perspective représentant schématiquement une micro-ferme maraîchère comportant une serre comprenant plusieurs chapelles ;
● La Figure [Fig.2] est une vue schématique en perspective de dessus et semitransparente illustrant une serre comprenant plusieurs chapelles, munie d'un portique robotisé selon un mode de réalisation de l'invention ;
● La Figure [Fig.3] est une vue de face d'une chapelle représentée à la [Fig.2] illustrant schématiquement le système de portique robotisé selon un mode de réalisation de l'invention ;
● La Figure [Fig.4] est une vue schématique multiple illustrant le transfert du chariot du portique robotisé selon un mode de réalisation de l'invention d'une chapelle à une autre, dans une serre multi-chapelles ;
● Les Figures [Fig.5] et [Fig.6] sont des vues schématiques respectivement en perspective de dessus et de côté, du portique robotisé se trouvant dans une zone de transfert inter-chapelle selon un mode de réalisation de l'invention ;
● La Figure [Fig.7] est une vue schématique et partielle en perspective de dessus montrant une partie du chariot d'aiguillage inter-chapelle, sans le chariot du portique robotisé, selon un mode de réalisation de l'invention ;
● La Figure [Fig.8] est une vue schématique de face d'une partie du chariot d'aiguillage inter-chapelle et du portique robotisé se trouvant dans la zone de transfert inter-chapelle montrant un détail de la Figure [Fig.6] ;
● La Figure [Fig.9] est une vue schématique de côté d'une partie du chariot d'aiguillage inter-chapelle et du portique robotisé se trouvant dans la zone de transfert inter-chapelle montrant un détail de la Figure [Fig.6] selon AA ;
● La Figure [Fig.10] est une vue schématique de côté d'une partie du chariot d'aiguillage inter-chapelle montrant un détail de la Figure [Fig.9] dans laquelle le chariot du portique robotisé a été omis pour une question de clarté ;
● Les Figures [Fig.11] et [Fig.12] sont des vues schématiques en coupe, respectivement de côté et de face illustrant des rails avec pistes d'alimentation et de données intégrées du portique robotisé selon un mode de réalisation de l'invention ;
● Les Figures [Fig.13] et [Fig.14] sont des vues schématiques respectivement de côté et en perspective de dessus d'un mécanisme de butée escamotable du portique robotisé se trouvant dans une zone de transfert inter-chapelle selon un mode de réalisation de l'invention ;
● Les Figures [Fig.15] et [Fig.16] sont des vues schématiques respectivement en perspective de côté et de côté en coupe partielle d'un mécanisme combiné de butée escamotable et centrage du portique robotisé se trouvant dans une zone de transfert inter-chapelle selon un mode de réalisation de l'invention ; et
● La Figure [Fig.17] est une vue schématique de face en coupe partielle illustrant un mécanisme d'alignement par translation du portique robotisé se trouvant dans une zone de transfert inter-chapelle selon un mode de réalisation de l'invention.

### Description détaillée

L'invention sera comprise à partir de la description suivante, dans laquelle il est fait référence aux dessins annexés.

### Portique robotisé dans la serre:

La Figure [Fig.1] montre schématiquement une micro-ferme maraîchère MF selon une vue en perspective. La micro-ferme maraîchère MF comporte par exemple au moins une serre 1 comprenant plusieurs chapelles par exemple quatre chapelles adjacentes 1A, 1B, 1C et 1D.

La Figure [Fig.2] montre schématiquement une serre 1 comprenant quatre chapelles adjacentes 1A, 1B, 1C et 1D selon une vue en perspective de dessus et semitransparente. La Figure [Fig.3] est une vue de face d'une première chapelle 1A représentée à la [Fig.2] montrant schématiquement le système de portique robotisé 10. La première chapelle 1A est réalisée par une succession d'arches 3 alignées selon une direction longitudinale X, chaque arche étant ancrée de manière appropriée dans le sol 2. Une surface de culture, c'est-à-dire des rangs de cultures maraîchères RM s'étendent sur le sol 2 sous la première chapelle 1A selon la direction longitudinale X dans une zone de culture 7. Également, une zone de stockage des outils 6 est prévue sur le sol 2 sous la première chapelle 1A. Bien que la Figure [Fig.2] montre cette zone de stockage des outils 6 à l'extrémité de la première chapelle 1A, elle pourrait aussi être positionnée ailleurs dans la première chapelle 1A, par exemple au milieu de la zone de culture 7, ou ailleurs dans la serre 1, par exemple dans une autre chapelle 1B, 1C, 1D, ou ailleurs à l'extérieur de la serre 1. La première chapelle 1A est munie d'un système de portique robotisé 10. Des rails longitudinaux 4A et 4B sensiblement horizontaux et en vis-à-vis sont fixés sur chacun des deux montants verticaux des arches 3 à une hauteur définie appropriée. Les rails longitudinaux 4A et 4B s'étendent selon la direction longitudinale X. Un premier chariot 11 peut se déplacer le long des rails longitudinaux 4A, 4B selon la direction longitudinale X. Le déplacement selon la direction longitudinale X est réalisé par un ensemble motorisé 13A alimenté et contrôlé par un premier boîtier électrique 14A. Le premier chariot 11 (deux rails parallèles s'étendant selon la direction transversale Y couplés par une structure de renfort et couplé aux rails longitudinaux 4A et 4B par l'intermédiaire de deux ensembles à galets au niveau des deux flancs respectifs) assure le support et le guidage latéral d'un second chariot 12 selon la direction transversale Y. Le second chariot 12 est muni d'un porte-outil 20 pour mettre en œuvre un outil 30 relativement à la surface de culture, par exemple des rangs de cultures maraîchères RM. L'outil 30 de culture peut être un outil agricole du type passif (i.e. essentiellement mécanique) ou du type actif (i.e. pouvant comporter un moteur et/ou des actionneurs et/ou des capteurs). A titre d'exemples non limitatifs, l'outil 30 peut être un outil d'aplanissage, un rouleau-plombeur, un râteau, un motoculteur, un semoir, un outil de désherbage herse étrille ou préci-disque, une repiqueuse à plants, un décompacteur, un épandeur, un soc de labour, un plantoir, un dispositif de traitement des indésirables, etc. Le second chariot 12 comporte également une colonne 15 pour réaliser le déplacement de l'outil 30 selon la direction verticale Z. Les déplacements selon les directions transversale Y et verticale Z sont assurés par un second ensemble motorisé 13B alimenté et contrôlé par un second boîtier électrique 14B. Des butées 5 peuvent être prévues, par exemple au niveau d'un ou de deux rails 4A, 4B pour éviter le déplacement du portique robotisé 10 au-delà d'une position extrême prédéfinie. Un système informatique 50 contrôle le fonctionnement du portique robotisé 10, c'est-à-dire le déplacement des chariots 11, 12, du porte-outil 20, de la colonne 15, le choix de l'outil 30 adapté à l'intervention agricole envisagée et l'actionnement de l'outil 30. Plus précisément, le système informatique 50 comporte un ordinateur 51 muni d'une mémoire 52 dans laquelle est stocké un logiciel 53 de gestion de l'activité maraîchère, de planification et du suivi quotidien de l'activité de l'exploitation de la micro-ferme maraîchère MF. Le système informatique 50 peut aussi interagir avec un dispositif mobile de type tablette informatique ou mobile multifonction/smartphone 54. Le système informatique 50 peut aussi recevoir des données variées (météorologie, température, humidité de l'air, humidité du sol, vent, ensoleillement, état du sol, état des plantes, etc.) de la part de capteurs 8 disposés dans et en dehors de la serre 1. Ces données peuvent être prises en compte par le logiciel 53. Le fonctionnement détaillé du système de portique robotisé 10, du porte-outil 20 et de la mise en œuvre d'un outil 30 ne sera pas décrit plus en détail ici car ces éléments ne font pas partie de l'objet de la présente invention et sont décrits en détails dans la demande de brevet FR2112079.

Les autres chapelles 1B, 1C et 1D peuvent être conçues de manière similaire à la première chapelle 1A. D'autres serres analogues à la première serre 1 peuvent également faire partie de la micro-ferme maraîchère MF.

### Zone de transfert inter-chapelle:

Une zone de transfert inter-chapelle 60 est prévue entre les différentes chapelles, c'est-à-dire entre les quatre chapelles adjacentes 1A, 1B, 1C et 1D. La zone de transfert inter-chapelle 60 comporte un mécanisme d'aiguillage inter-chapelle 61 permettant au chariot 11 du portique robotisé 10 soit de continuer son trajet selon la direction longitudinale X, soit d'être translaté pour quitter la chapelle dans laquelle il se trouve et se rendre dans une autre chapelle ou une autre serre selon la direction transversale Y. Dans le mode de réalisation présenté sur la Figure [Fig.2], la zone de transfert inter-chapelle 60 est unique et s'étend selon la direction transversale Y de la première chapelle 1A, vers la deuxième chapelle 1B puis la troisième chapelle 1C et se termine dans la quatrième chapelle 1D. La zone de transfert inter-chapelle 60 peut être positionnée à n'importe quelle position selon la direction longitudinale X, à l'une ou l'autre extrémité, au milieu, etc. La Figure [Fig.2] montre une zone de transfert inter-chapelle 60 sensiblement centrée dans la serre 1.

Des rails transversaux inter-chapelle 70A et 70B sensiblement horizontaux et en vis-à-vis sont fixés sur les montants verticaux des arches 3. Les rails transversaux inter-chapelle 70A et 70B sont fixés à une hauteur de telle sorte à ne pas gêner le déplacement du premier chariot 11 sur les rails longitudinaux 4A, 4B. Les rails transversaux inter-chapelle 70A et 70B peuvent être fixés au-dessus des rails longitudinaux 4A, 4B. Dans l'exemple présenté sur la Figure [Fig.2], les rails transversaux inter-chapelle 70A et 70B s'étendent d'un seul tenant d'un côté latéral de la serre, c'est-à-dire de la première chapelle 1A, jusqu'à l'autre côté latéral de la serre, c'est-à-dire de la quatrième chapelle 1D, en traversant toutes les chapelles de manière transversale selon la direction transversale Y.

La zone de transfert inter-chapelle 60 s'interface avec les rails longitudinaux 4A, 4B s'étendant selon la direction longitudinale X. Elle est donc positionnée en hauteur et n'interfère pas avec la surface de culture, c'est-à-dire avec les rangs de cultures maraîchères RM s'étendant sur le sol 2.

Les rails longitudinaux 4A, 4B sont discontinus dans la zone de transfert inter-chapelle 60. Plus précisément, chaque rail longitudinal 4A ou 4B s'arrête de part et d'autre de la limite de la zone de transfert inter-chapelle 60 en formant une section interrompue.

Bien que non représentée, la zone de transfert inter-chapelle 60, tout en s'étendant selon la direction transversale Y, peut être prévue selon des sections différentes entre deux chapelles adjacentes, par exemple au milieu entre la première 1A et la deuxième 1B chapelle, à une extrémité entre la deuxième 1B et la troisième 1C chapelle et à une autre extrémité entre la troisième 1C et la quatrième 1D chapelle. Selon ce mode de réalisation, les rails transversaux inter-chapelle 70A et 70B sont réalisés sous la forme de sections indépendantes s'étendant entre deux chapelles directement adjacentes, c'est-à-dire par exemple une première section de rails transversaux inter-chapelle entre la première 1A et la deuxième 1B chapelle, une seconde section entre la deuxième 1B et la troisième 1C chapelle et une troisième section entre la troisième 1C et la quatrième 1D chapelle. En outre, bien que non représentée, la zone de transfert inter-chapelle 60 peut également s'étendre de la serre 1 vers une autre serre disposée de manière adjacente.

Un chariot d'aiguillage inter-chapelle 62 est prévu pour se déplacer dans la zone de transfert inter-chapelle 60. Le chariot se déplace d'une chapelle à une autre par l'intermédiaire des rails transversaux inter-chapelle 70A et 70B. Le chariot d'aiguillage inter-chapelle 62 comporte deux sections de rails de chariot d'aiguillage longitudinaux 63A, 63B en vis-à-vis qui viennent se positionner dans la section interrompue (visible par exemple sur la Figure [Fig.5]). Un ensemble motorisé du chariot d'aiguillage 64 assure le déplacement du chariot d'aiguillage inter-chapelle 62 sur les rails transversaux inter-chapelle 70A et 70B.

### Fonctionnement du transfert inter-chapelle:

La Figure [Fig.4] est une vue schématique multiple qui illustre le transfert du chariot 11 du portique robotisé 10 selon un mode de réalisation de l'invention d'une première chapelle 1A à une troisième chapelle 1C, pour une serre multi-chapelles 1 comportant une zone de transfert inter-chapelle 60 unique sensiblement positionnée au milieu de la serre.

Lors d'une première étape S1, le premier chariot 11 du portique robotisé 10 est dirigé vers la zone de transfert inter-chapelle 60 dans la première chapelle 1A. Le premier chariot 11 se déplace selon l'axe longitudinal X.

Lors d'une deuxième étape S2, une fois avoir atteint la zone de transfert inter-chapelle 60, le premier chariot 11 du portique robotisé 10 se trouve donc couplé au chariot d'aiguillage inter-chapelle 62. Le premier chariot 11 du portique robotisé 10 peut être bloqué en place sur le chariot d'aiguillage inter-chapelle 62.

Lors d'une troisième étape S3, le chariot d'aiguillage inter-chapelle 62 transportant le premier chariot 11 du portique robotisé 10 est dirigé vers la chapelle de destination, dans cet exemple la troisième chapelle 1C. Le chariot d'aiguillage inter-chapelle 62 se déplace selon l'axe transversal Y le long des rails transversaux inter-chapelle 70A et 70B.

Lors d'une quatrième étape S4, le chariot d'aiguillage inter-chapelle 62 atteint la troisième chapelle 1C de destination. Il est bloqué de manière appropriée en position de sorte que les deux sections de rails de chariot d'aiguillage longitudinaux 63A, 63B en vis-à-vis viennent se positionner dans la section interrompue pour former des rails longitudinaux 4A, 4B continus dans cette chapelle. A la fin de cette opération de transfert, le premier chariot 11 du portique robotisé 10 est découplé du chariot d'aiguillage inter-chapelle 62.

Lors d'une cinquième étape S5, le premier chariot 11 du portique robotisé 10 peut être déplacé dans la troisième chapelle 1C pour y effectuer le ou les tâches maraîchères prévues. Le chariot d'aiguillage inter-chapelle 62 reste en position dans cette troisième chapelle 1C afin de maintenir la continuité des rails longitudinaux 4A, 4B par l'intermédiaire des deux sections de rails de chariot d'aiguillage longitudinaux 63A, 63B et de permettre au premier chariot 11 du portique robotisé 10 de se déplacer dans la totalité de cette chapelle.

### Chariot d'aiguillage inter-chapelle:

La Figure [Fig.5] est une vue schématique en perspective de dessus d'un exemple de portique robotisé, dans lequel le premier chariot 11 et le second chariot 12 se trouvent dans la zone de transfert inter-chapelle 60, seule une partie d'une seule chapelle est montrée sur cette Figure et les rails longitudinaux 4A, 4B ne sont pas montrés pour des raisons de clarté. La Figure [Fig.6] est une vue schématique de côté, du portique robotisé se trouvant dans la zone de transfert inter-chapelle 60 qui illustre particulièrement la manière dont le premier chariot 11 et le second chariot 12 s'interfacent avec le chariot d'aiguillage inter-chapelle 62, et également l'ensemble motorisé 64 du chariot d'aiguillage inter-chapelle 62. La Figure [Fig.7] est une vue schématique et partielle en perspective de dessus montrant une partie du chariot d'aiguillage inter-chapelle 62, sans les chariots 11, 12 du portique robotisé pour des raisons de clarté. La Figure [Fig.8] est une vue schématique de face d'une partie du chariot d'aiguillage inter-chapelle 62 et du portique robotisé 11 se trouvant dans la zone de transfert inter-chapelle 60 montrant un détail de la Figure [Fig.6]. La Figure [Fig.9] est une vue schématique de côté d'une partie du chariot d'aiguillage inter-chapelle 62 et du portique robotisé 10 se trouvant dans la zone de transfert inter-chapelle 60 montrant un détail de la Figure [Fig.6] selon la coupe AA. La Figure [Fig.10] est une vue schématique de côté d'une partie du chariot d'aiguillage inter-chapelle 62 montrant un détail de la Figure [Fig.9] dans laquelle le chariot du portique robotisé 11 a été omis pour une question de clarté.

Le chariot d'aiguillage inter-chapelle 62 comporte un ensemble motorisé de chariot d'aiguillage 64 couplé à un boîtier électrique de chariot d'aiguillage 65A. Selon l'exemple de réalisation présenté, l'ensemble motorisé de chariot d'aiguillage 64 peut comporter, de chaque côté du chariot d'aiguillage inter-chapelle 62 selon la direction transversale Y, deux platines de liaison à galet 69A, respectivement 69B, permettant de coupler le chariot d'aiguillage inter-chapelle 62 aux rails transversaux inter-chapelle 70A, respectivement 70B et le guider dans son déplacement selon la direction transversale Y. La Figure [Fig.8] montre une coupe d'un rail transversal inter-chapelle 70A qui présente un profilé s'étendant horizontalement et définissant une cavité présentant une ouverture positionnée dans une paroi en partie basse et sur sensiblement toute la longueur du rail transversal inter-chapelle 70A, l'ouverture ayant une largeur plus faible que la largeur du profilé afin de ménager dans la paroi en partie basse au moins un épaulement, par exemple deux épaulements 72A, 72B de part et d'autre de l'ouverture. Les deux épaulements servent de surface d'appui pour les galets de chacune des platines de liaison à galet 69A, 69B, par exemple un ensemble de galets internes 73 (se déplaçant sur la surface d'appui d'un épaulement dans la cavité du profilé) et externes 74 (se déplaçant sur la surface d'appui d'un épaulement extérieurement par exemple en dessous du profilé). Ainsi, le chariot d'aiguillage inter-chapelle 62 est supporté et guidé lors d'un déplacement selon la direction transversale Y. L'ensemble motorisé de chariot d'aiguillage 64 peut comporter une unité servomoteur et réducteur d'aiguillage 66A couplée à des pignons 67A, 67B respectifs par des arbres 68A, 68B associés. L'unité servomoteur et réducteur 66A peut être positionnée et supportée sensiblement au milieu d'une des deux sections de rails de chariot d'aiguillage longitudinaux 63A, 63B. Les arbres 68A, 68B peuvent s'étendre de part et d'autre de l'unité servomoteur et réducteur 66A, de manière sensiblement horizontale et parallèlement à la section de rail 63A, et se terminer par les pignons 67A, 67B en position distale. Chacun des rails transversaux inter-chapelle 70A, respectivement 70B peut être muni d'une crémaillère de rail transversal 71A, respectivement 71B. Les pignons 67A, respectivement 67B sont positionnés et prévus pour s'engrener avec la crémaillère de rail transversal 71A, respectivement 71B correspondante. Dans l'exemple de réalisation présenté, plus précisément, l'ensemble motorisé de chariot d'aiguillage 64 peut comporter deux unités servomoteur et réducteur, l'une 66A d'un côté supporté par la section de rail de chariot d'aiguillage longitudinal 63A (comme décrit ci-dessus), l'autre 66B de l'autre côté supporté par la section de rail de chariot d'aiguillage longitudinal en vis-à-vis 63B (visible sur les Figures [Fig.3] et [Fig.5]). L'unité 66B ne sera pas décrite plus en détails car cette unité est identique dans son couplage aux crémaillères et son fonctionnement. Les deux unités servomoteur et réducteur d'aiguillage 66A, 66B sont avantageusement synchronisées dans leur fonctionnement et permettent une translation régulièrement sans heurt du chariot d'aiguillage inter-chapelle 62 lors du transfert inter-chapelle selon la direction transversale Y.

### Rails avec pistes intégrées:

Les Figures [Fig.11] et [Fig.12] sont des vues schématiques en coupe, respectivement de côté et de face illustrant des rails avec un ensemble d'alimentation de puissance et de communication de données 80 intégré et interne aux rails pour le portique robotisé selon un mode de réalisation de l'invention. L'ensemble d'alimentation de puissance et de communication de données 80 intégré et interne est totalement optionnel, il permet d'obtenir une alimentation et un échange de données efficaces et fiables. Cependant, ces fonctions pourraient aussi être réalisées autrement par une alimentation autonome sur batterie de chacun des chariots, et/ou une transmission des données sans-fil par toute technologie appropriée. L'ensemble d'alimentation de puissance et de communication de données 80 intégré et interne peut concerner n'importe lesquels des rails décrits précédemment, à savoir les rails longitudinaux de guidage selon l'axe longitudinal X 4A, 4B, les sections de rails de chariot d'aiguillage longitudinaux 63A, 63B, et/ou les rails transversaux inter-chapelle 70A, 70B. Chacun de ces rails peut être un profilé s'étendant horizontalement et définissant une cavité présentant une ouverture positionnée en partie basse et sur toute la longueur de chaque rail, l'ouverture ayant une largeur plus faible que la largeur du profilé afin de ménager au moins un épaulement, par exemple deux épaulements de part et d'autre de l'ouverture. Chaque épaulement peut servir de surface d'appui pour un ou plusieurs galets de platines de liaison à galet. Les galets sont arrangés pour coopérer avec le profilé, c'est à dire se déplacer sur les surfaces d'appui des épaulements et, ainsi, permettre de supporter et guider les divers chariots (premier chariot 11, second chariot 12 du portique robotisé 10 et chariot d'aiguillage inter-chapelle 62) lors de leurs déplacements selon la direction longitudinale X ou la direction transversale Y. L'ensemble d'alimentation de puissance et de communication de données 80 comporte au moins une piste conductrice 81A, 81B. Le profilé peut comporter au moins une piste d'alimentation électrique des moteurs des chariots 81A. Le profilé peut également comporter au moins une piste de données 81B pour la transmission des données et commandes entre le système informatique 50 et les chariots 11, 12, 62. Les pistes conductrices 81A, 81B peuvent être démultipliées en nombre pour assurer une redondance. Chaque piste conductrice 81A, 81B peut être réalisée sous la forme d'une piste conductrice reçue dans un guide en plastique. Les rails décrits précédemment 4A, 4B, 63A, 63B, 70A, 70B sont alimentés indépendamment les uns des autres. Les chariots décrits précédemment 11, 12, 62 sont munis de charbons 82 supportés par une unité d'alimentation et de communication 83, par exemple supportée par une platine de liaison à galet, se trouvant dans la cavité du profilé, et frottant sur les pistes conductrices 81A, 81B.

Lors du transfert inter-chapelle, d'une part l'alimentation des pistes des rails longitudinaux 4A, 4B et l'alimentation des pistes des sections de rails de chariot d'aiguillage longitudinaux 63A, 63B sont coupées, et d'autre part une redondance de l'alimentation est prévue en ce qui concerne les pistes des rails transversaux inter-chapelle afin d'assurer un transfert sans heurt d'une chapelle à une autre.

En outre, les pistes des rails longitudinaux 4A, respectivement 4B et les pistes des sections de rails de chariot d'aiguillage longitudinaux 63A, respectivement 63B sont sensiblement alignées afin d'assurer un passage sans heurt de la zone de transfert inter-chapelle 60 lors du déplacement dans une chapelle du premier chariot 11 du portique robotisé 10 pour y effectuer des tâches maraîchères (le chariot d'aiguillage inter-chapelle 62 étant bloqué en place dans la chapelle où sont réalisées les tâches maraîchères).

### Mécanisme de butée escamotable:

Les Figures [Fig.13] et [Fig.14] sont des vues schématiques respectivement de côté et en perspective de dessus d'un mécanisme de butée escamotable 90 pour le premier chariot 11 du portique robotisé 10. Le mécanisme de butée escamotable 90 est totalement optionnel, il permet cependant de réduire les risques de fausse-manœuvre lors des transferts. Sur ces Figures, le premier chariot 11 est sur le point d'aborder la jonction entre les rails longitudinaux 4A, 4B et les sections de rails de chariot d'aiguillage longitudinaux 63A, 63B, et d'arriver dans la zone de transfert inter-chapelle 60. Le mécanisme de butée escamotable 90 est activé lors des opérations de transfert inter-chapelle selon un mode de réalisation de l'invention. Les Figures [Fig.13] et [Fig.14] ne montrent qu'un seul mécanisme de butée escamotable 90, dans un état désactivé, pour des raisons de clarté.

Le mécanisme de butée escamotable 90 est uniquement activé lorsque le premier chariot 11 se trouve dans la zone de transfert inter-chapelle et lors du transfert du premier chariot 11 d'une chapelle vers une autre chapelle. Il assure une fonction de sécurité, en empêchant tout mouvement du premier chariot 11 hors de la zone de transfert inter-chapelle 60 du début à la fin de l'opération de transfert inter-chapelle. Alternativement, il peut aussi être configuré pour empêcher le chariot 11 de se rendre sur la zone de transfert si le chariot d'aiguillage inter-chapelle 62 n'est pas présent à cet endroit. Le mécanisme de butée escamotable 90 comporte au moins deux butées escamotables positionnées de manière appropriée aux extrémités des sections de rails de chariot d'aiguillage longitudinaux 63A, 63B. Chaque butée escamotable constitue un obstacle mécanique bloquant le déplacement du premier chariot 11 hors des sections de rails de chariot d'aiguillage longitudinaux 63A, 63B vers les rails longitudinaux 4A, 4B.

Chaque butée escamotable comporte une plaque butée 91, un ressort 92 et un vérin 93. La plaque butée 91 est fixée au rail (par exemple à une des sections de rails de chariot d'aiguillage longitudinaux 63A, 63B) par un axe de rotation et par le ressort 92 en partie haute de la plaque butée 91. Le vérin 93 comporte un doigt 95 lequel coopère avec une pièce basse en saillie 94 de la plaque butée 91 afin d'activer ou de désactiver la butée escamotable 90. Sous l'action du doigt du vérin 93, la pièce basse en saillie 94 de la plaque butée 91 est repoussée, le ressort 92 est mis sous tension, la butée escamotable 90 n'est pas activée et la plaque butée 91 permet le passage du premier chariot 11. Lorsque le vérin 93 est désactivée, la pièce basse en saillie 94 de la plaque butée 91 est repoussée sous l'action du ressort 92, la butée escamotable 90 est activée et la plaque butée 91 bloque le passage du premier chariot 11.

Lors de la phase de transfert entre deux chapelles, le doigt 95 du vérin 93 est rétracté et la butée escamotable 90 est activée par l'action du ressort 92 de sorte que la plaque butée 91 bloque le passage du premier chariot 11.

Le mécanisme de butée escamotable 90 est avantageusement interfacé avec le système informatique 50 qui commande son fonctionnement en coordination avec le transfert du chariot entre différentes chapelles lors d'une opération de transfert inter-chapelle.

Les Figures [Fig.15] et [Fig.16] sont des vues schématiques respectivement en perspective de côté et de côté en coupe partielle d'un mécanisme combiné de butée escamotable et de centrage 90A. Ce mécanisme diffère de celui des Figures [Fig.13] et [Fig.14] en ce qu'il comporte en outre un moyen de centrage qui coopère avec la butée escamotable pour assurer un meilleur alignement, plus précisément pour corriger les éventuels problèmes d'alignement. De tels problèmes d'alignement peuvent avoir diverses causes, comme par exemple des phénomènes de dilatation, la difficulté d'un alignement parfait dans de grande structure de serre comportant un grand nombre de chapelles, etc... Le moyen de centrage permet d'assurer que le chariot d'aiguillage inter-chapelle est correctement positionné dans la zone de transfert inter-chapelle 60, ce qui réduit fortement les risques de blocage lors du transfert.

Chaque butée escamotable et de centrage 90A comporte une plaque butée 91, un ressort 92, une glissière 96, un logement de centrage 97 et un vérin 93. La plaque butée 91 est fixée au rail (par exemple à une des sections de rails de chariot d'aiguillage longitudinaux 63A, 63B) par un axe de rotation et par le ressort 92 en partie haute de la plaque butée 91. Le vérin 93 comporte un doigt 95 lequel coopère, d'une part, avec une pièce basse en saillie 94 de la plaque butée 91 afin d'activer ou de désactiver la butée escamotable 90, et, d'autre part, avec le logement de centrage 97 lié à une section de rails longitudinaux 4A, 4B tout en traversant la glissière 96 liée à une section de rails de chariot d'aiguillage longitudinaux 63A, 63B. Le logement de centrage 97 est traversant de sorte que l'extrémité du doigt 95 puisse le traverser de part en part pour activer la pièce basse en saillie 94. Sous l'action du doigt 95 du vérin 93, la pièce basse en saillie 94 de la plaque butée 91 est repoussée, le ressort 92 est mis sous tension, la butée escamotable 90 n'est pas activée et la plaque butée 91 permet le passage du premier chariot 11, les rails longitudinaux 4A, 4B et les rails de chariot d'aiguillage longitudinaux 63A, 63B étant parfaitement alignés par l'intermédiaire du doigt 95 guidé dans la glissière 96 et pénétrant le logement de centrage 97. Lorsque le vérin 93 est désactivée, la pièce basse en saillie 94 de la plaque butée 91 est repoussée sous l'action du ressort 92, la butée escamotable 90 est activée et la plaque butée 91 bloque le passage du premier chariot 11, l'extrémité du doigt 95 se trouvant alors logé dans la glissière 96 et bien sortie hors du logement de centrage 97. Lors de la phase de transfert entre deux chapelles, le doigt 95 du vérin 93 est rétracté et la butée escamotable 90 est activée par l'action du ressort 92 de sorte que la plaque butée 91 bloque le passage du premier chariot 11, l'extrémité du doigt 95 se trouvant hors du logement de centrage 97, celui-ci ne bloque plus le déplacement relatif entre les rails longitudinaux 4A, 4B et les rails de chariot d'aiguillage longitudinaux 63A, 63B.

Le mécanisme combiné de butée escamotable et de centrage 90A est interfacé avec le système informatique 50 qui commande son fonctionnement en coordination avec le transfert du chariot entre différentes chapelles lors d'une opération de transfert inter-chapelle.

A titre optionnel, le mécanisme de butée escamotable 90, respectivement le mécanisme combiné de butée escamotable et de centrage 90A peut également comporter une butée d'impact 98. La butée d'impact 98 est fixée au rail (par exemple à une des sections de rails de chariot d'aiguillage longitudinaux 63A, 63B) par un axe de rotation et par le doigt 95. La butée d'impact 98 est prévue pour coopérer avec un amortisseur d'impact 99 fixé sur le premier chariot 11. La butée d'impact 98 et l'amortisseur d'impact 99 permettent d'amortir l'impact du chariot 11 lorsque celui-ci est déplacé latéralement à l'occasion de la phase de transfert entre deux chapelles et qu'il atteint une position finale de transfert dans la chapelle de destination.

Encore à titre optionnel, au moins un capteur de positionnement 8A peut être prévu pour confirmer la position du premier chariot 11 dans la zone de transfert inter-chapelle 60 et l'alignement avec les rails longitudinaux. Le capteur de positionnement 100 est aussi interfacé avec le système informatique 50 qui commande le fonctionnement du mécanisme de butée escamotable 90, respectivement du mécanisme combiné de butée escamotable et de centrage 90A en coordination avec le transfert du chariot entre différentes chapelles lors d'une opération de transfert inter-chapelle.

La Figure [Fig.17] est une vue schématique de face en coupe partielle illustrant un mécanisme d'alignement par translation 100. Ce mécanisme d'alignement par translation 100 peut en particulier coopérer avec le mécanisme combiné de butée escamotable et de centrage 90A des Figures [Fig.15] à [Fig.16]. Le mécanisme d'alignement par translation 100 comporte un axe horizontal 101 reçu dans une pièce glissière 102, ledit axe 101 et ladite pièce glissière 102 étant couplés ensemble par l'intermédiaire de deux ressorts horizontaux latéraux 103A, 103B. De cette manière, au moins un rail de chariot d'aiguillage longitudinal 63A et/ou 63B qui accueille le premier chariot est flottant. Il peut se translater horizontalement, par exemple de +/- 10 mm dans la direction longitudinale. Le mécanisme d'alignement par translation 100 peut coopérer avec le mécanisme combiné de butée escamotable et de centrage 90A pour former une interface flexible permettant de corriger les problèmes d'alignement, et assurer un alignement lors du transfert du premier chariot entre deux chapelles. En effet, le mécanisme d'alignement par translation 100 offre un degré de liberté supplémentaire permettant de rendre ledit rail de chariot d'aiguillage longitudinal 63A et/ou 63B flottant en translation horizontalement relativement au rail longitudinal correspondant 4A et/ou 4B lorsque le doigt 95 pénètre dans logement de centrage 97 du mécanisme de butée escamotable et de centrage 90A.

Les dessins et leur description ci-dessus illustrent plutôt qu'ils ne limitent l'invention. Il convient de noter que, même si les modes de réalisation et alternatives de la présente invention ont été illustrés pour un usage dans une serre comprenant plusieurs chapelles, il est aussi adapté à un usage entre plusieurs serres (transfert inter-serres) à chapelle unique ou à plusieurs chapelles. Il peut aussi être utilisé pour un usage hors d'une serre dans la mesure où la zone à cultiver serait munie de poteaux supportant des rails permettant au portique robotisé de se déplacer, la serre est donc à comprendre dans son acception la plus large à savoir une surface de culture sous une structure de culture. En outre, plusieurs boitiers électriques ont été présentés pour différencier le contrôle et l'alimentation de différents éléments, mais ils pourraient tout aussi bien être regroupés dans un boitier électrique unique. Que ce soit l'ensemble d'alimentation de puissance et de communication de données ou les divers mécanismes de butée escamotable tels que présentés et décrits, ils ne sont pas essentiels au fonctionnement du chariot d'aiguillage inter-chapelle et donc au transfert inter-chapelle lesquels peuvent être opérés de manière indépendante de ces dispositifs, l'ensemble d'alimentation de puissance et de communication de données et les divers mécanismes de butée escamotable n'étant que des moyens pour améliorer l'efficacité et la sécurité du transfert inter-chapelle. En particulier, les pistes intégrées de l'ensemble d'alimentation de puissance et de communication de données peuvent être remplacées par des câbles, et le mécanisme de butée escamotable peut être omis. En outre, la communication de données peut également être réalisée par tout type de moyens de communication sans fil, par exemple par WiFi (de l'anglais « Wireless Fidelity », conformément à la norme IEEE 802.11).

## Revendications

1. Un système de portique robotisé agricole (10) pour une serre (1) comprenant plusieurs chapelles adjacentes (1A, 1B, 1C, 1D) comprenant :
- un premier chariot (11) pouvant se déplacer le long de rails longitudinaux (4A, 4B) selon une direction longitudinale (X), le premier chariot (11) supportant et guidant latéralement selon une direction transversale (Y) un second chariot (12) muni d'un porte-outil (20) pour mettre en œuvre un outil (30) relativement à une surface de culture (RM), chaque chapelle supportant deux rails longitudinaux (4A, 4B) sensiblement horizontaux et en vis-à-vis, lesdites chapelles et lesdits rails longitudinaux s'étendant selon une direction longitudinale (X) ;
- un mécanisme d'aiguillage inter-chapelle (61) positionné dans une zone de transfert inter-chapelle (60) s'étendant entre les chapelles (1A, 1B, 1C, 1D) selon la direction transversale (Y), le mécanisme d'aiguillage inter-chapelle (61) étant agencé de telle sorte que le premier chariot (11) est opérable soit dans une configuration de travail dans laquelle le premier chariot (11) est déplaçable dans une chapelle définie selon la direction longitudinale (X), soit dans une configuration d'aiguillage laquelle est **caractérisée en ce que** le premier chariot (11) est translatable de ladite chapelle définie vers une chapelle de destination selon la direction transversale (Y) ;
le système est en outre **caractérisé en ce que** le mécanisme d'aiguillage inter-chapelle (61) comporte :
- des rails transversaux inter-chapelle (70A, 70B) sensiblement horizontaux, en vis-à-vis et s'étendant selon la direction transversale (Y) entre au moins ladite chapelle définie et ladite chapelle de destination ; et
- un chariot d'aiguillage inter-chapelle (62) agencé pour se coupler au premier chariot (11) et translatable dans la zone de transfert inter-chapelle (60) par l'intermédiaire des rails transversaux inter-chapelle (70A, 70B) ;
et **en ce que** :
- les deux rails longitudinaux (4A, 4B) sont discontinus au niveau de la zone de transfert inter-chapelle (60) de manière à former deux sections interrompues définies de part et d'autre de la zone de transfert inter-chapelle (60) ; et
- le chariot d'aiguillage inter-chapelle (62) comporte deux sections de rails de chariot d'aiguillage longitudinaux (63A, 63B) en vis-à-vis, chacune se positionnant dans la section interrompue associée.

2. Le système selon la revendication 1, dans lequel :
- les rails longitudinaux (4A, 4B) sensiblement horizontaux et en vis-à-vis sont fixés sur chacun des deux montants verticaux des arches (3) de chaque chapelle (1A, 1B, 1C, 1D) à une hauteur définie ; et
- les rails transversaux inter-chapelle (70A, 70B) sont fixés au-dessus des rails longitudinaux (4A, 4B) à une hauteur déterminée de telle sorte à permettre le déplacement du premier chariot (11) sur les rails longitudinaux (4A, 4B).

3. Le système selon la revendication 1 ou 2, dans lequel le chariot d'aiguillage inter-chapelle (62) comporte un ensemble motorisé de chariot d'aiguillage (64) apte à déplacer le chariot d'aiguillage inter-chapelle (62) sur les rails transversaux inter-chapelle (70A, 70B).

4. Le système selon la revendication 3, dans lequel l'ensemble motorisé de chariot d'aiguillage (64) comporte, de chaque côté du chariot d'aiguillage inter-chapelle (62) selon l'axe transversal (Y), deux platines de liaison à galet (69A, 69B) pour coupler le chariot d'aiguillage inter-chapelle (62) aux rails transversaux inter-chapelle (70A, 70B) et le guider lors du déplacement selon la direction transversale (Y).

5. Le système selon la revendication 4, dans lequel chaque rail transversal inter-chapelle (70A, 70 B) présente un profilé s'étendant horizontalement et définissant une cavité présentant une ouverture positionnée dans une paroi en partie basse et sur toute sa longueur, l'ouverture ayant une largeur plus faible que la largeur du profilé afin de ménager dans la paroi en partie basse au moins un épaulement (72A, 72B) servant de surface d'appui pour les galets de chacune des platines de liaison à galet (69A, 69B), lesdites platines de liaison à galet (69A, 69B) comportant un ensemble de galets internes (73) se déplaçant sur la surface d'appui de l'épaulement dans la cavité du profilé et un ensemble de galets externes (74) se déplaçant sur la surface d'appui de l'épaulement extérieurement en dessous du profilé de telle sorte que le chariot d'aiguillage inter-chapelle (62) soit supporté et guidé lors d'un déplacement selon la direction transversale (Y).

6. Le système selon l'une quelconque des revendications 3 à 5, dans lequel l'ensemble motorisé de chariot d'aiguillage (64) comporte au moins une unité servomoteur et réducteur d'aiguillage (66A) couplée à des pignons (67A, 67B) en position distale par des arbres (68A, 68B) associés, chacun des rails transversaux inter-chapelle (70A, 70B) étant muni d'une crémaillère de rail transversal (71A, 71B), lesdits pignons (67A, 67B) étant agencés pour s'engrener avec la crémaillère de rail transversal (71A, 71B) correspondante.

7. Le système selon la revendication 6, dans lequel l'ensemble motorisé de chariot d'aiguillage (64) comporte deux unités servomoteur et réducteur, l'une (66A) d'un côté supporté par la section de rail de chariot d'aiguillage longitudinal (63A), l'autre (66B) de l'autre côté supporté par la section de rail de chariot d'aiguillage longitudinal en vis-à-vis (63B), les deux unités servomoteur et réducteur d'aiguillage (66A, 66B) étant synchronisés.

8. Le système selon l'une quelconque des revendications 1 à 7, dans lequel chacun des rails longitudinaux (4A, 4B), des sections de rails de chariot d'aiguillage longitudinaux (63A, 63B), et/ou des rails transversaux inter-chapelle (70A, 70B) sont réalisés sous la forme d'un profilé définissant une cavité comportant un ensemble d'alimentation de puissance et de communication de données (80) muni d'au moins une piste conductrice (81A, 81B) agencée pour coopérer avec au moins un charbon (82) supporté par une unité d'alimentation et de communication (83) du premier chariot (11), du second chariot (12) et/ou du chariot d'aiguillage inter-chapelle (62).

9. Le système selon l'une quelconque des revendications 1 à 8, dans lequel au moins une section de rail de chariot d'aiguillage longitudinal (63A, 63B) comporte un mécanisme de butée escamotable (90) comportant une plaque butée (91) fixée audit rail par un axe de rotation et par un ressort (92), et un vérin (93) muni d'un doigt (95) lequel coopère avec une pièce basse en saillie (94) de la plaque (91) pour bloquer ou autoriser le déplacement du premier chariot (11) des sections de rails de chariot d'aiguillage longitudinaux (63A, 63B) vers les rails longitudinaux (4A, 4B).

10. Le système selon l'une quelconque des revendications 1 à 8, dans lequel au moins une section de rail de chariot d'aiguillage longitudinal (63A, 63B) comporte un mécanisme de butée escamotable et de centrage (90A) comportant une plaque butée (91) fixée audit rail par un axe de rotation et par un ressort (92), et un vérin (93) muni d'un doigt (95) lequel coopère, d'une part, avec une pièce basse en saillie (94) de la plaque (91) pour bloquer ou autoriser le déplacement du premier chariot (11) des sections de rails de chariot d'aiguillage longitudinaux (63A, 63B) vers les rails longitudinaux (4A, 4B), et, d'autre part, traversant une glissière (96) liée à la section de rails de chariot d'aiguillage longitudinaux (63A, 63B) et un logement de centrage (97) lié à la section de rails longitudinaux (4A, 4B) pour aligner les rails de chariot d'aiguillage longitudinaux (63A, 63B) et les rails longitudinaux (4A, 4B).

11. Le système selon la revendication 9 ou 10, dans lequel le mécanisme de butée escamotable (90), respectivement le mécanisme combiné de butée escamotable et de centrage (90A) comporte une butée d'impact (98) fixée à la section de rails de chariot d'aiguillage longitudinaux (63A, 63B) par un second axe de rotation et par ledit doigt (95), la butée d'impact (98) coopérant avec un amortisseur d'impact (99) fixé sur le premier chariot (11).

12. Le système selon la revendication 10, dans lequel au moins une section de rail de chariot d'aiguillage longitudinal (63A ; 63B) comporte un mécanisme d'alignement par translation (100) comportant un axe horizontal (101) reçu dans une pièce glissière (102), ledit axe (101) et ladite pièce glissière (102) étant couplés ensemble par l'intermédiaire de deux ressorts horizontaux latéraux (103A, 103B) afin de rendre ledit rail de chariot d'aiguillage longitudinal (63A ; 63B) flottant en translation horizontale relativement au rail longitudinal correspondant (4A ; 4B) lorsque le doigt (95) pénètre dans logement de centrage (97) du mécanisme de butée escamotable et de centrage (90A).

13. Un procédé de fonctionnement d'un système de portique robotisé agricole (10) selon l'une quelconque des revendications 1 à 12, dans une serre (1) comprenant plusieurs chapelles adjacentes (1A, 1B, 1C, 1D) comprenant les étapes :
- diriger un premier chariot (11) d'un portique robotisé (10) vers une zone de transfert inter-chapelle (60) dans une chapelle définie, le premier chariot (11) étant déplaçable selon une direction longitudinale (X) ;
- coupler le premier chariot (11) à un chariot d'aiguillage inter-chapelle (62) dans la zone de transfert inter-chapelle (60) ;
- diriger le chariot d'aiguillage inter-chapelle (62) transportant le premier chariot (11) de la chapelle définie vers une chapelle de destination, le chariot d'aiguillage inter-chapelle (62) étant translatable selon la direction transversale (Y) le long de rails transversaux inter-chapelle (70A, 70B) ;
- stopper le chariot d'aiguillage inter-chapelle (62) dans la chapelle de destination et découpler le premier chariot (11) du chariot d'aiguillage inter-chapelle (62) ; et
- déplacer le premier chariot (11) dans la chapelle de destination pour y effectuer le ou les tâches maraîchères prévues.

## Patentansprüche

1. Landwirtschaftliches robotisches Portalsystem (10) für ein Gewächshaus (1), das mehrere benachbarte Tunnel (1A, 1B, 1C, 1D) umfasst, umfassend:
- einen ersten Wagen (11), der sich entlang von Längsschienen (4A, 4B) gemäß einer Längsrichtung (X) bewegen kann, wobei der erste Wagen (11) einen zweiten Wagen (12) gemäß einer Querrichtung (Y) seitlich trägt und führt, der mit einem Werkzeughalter (20) versehen ist, um ein Werkzeug (30) in Bezug auf eine Anbaufläche (RM) bereitzustellen, wobei jeder Tunnel zwei im Wesentlichen horizontale und gegenüberliegende Längsschienen (4A, 4B) trägt, wobei sich die Tunnel und die Längsschienen gemäß einer Längsrichtung erstrecken (X);
- einen Multitunnel-Rangiermechanismus (61), der in einem Multitunnel-Übergabebereich (60) positioniert ist, der sich gemäß der Querrichtung (Y) zwischen den Tunneln (1A, 1B, 1C, 1D) erstreckt, wobei der Multitunnel-Rangiermechanismus (61) derart eingerichtet ist, dass der erste Wagen (11) entweder in einer Arbeitskonfiguration bedienbar ist, in der der erste Wagen (11) in einem bestimmten Tunnel gemäß der Längsrichtung (X) bewegbar ist oder in einer Rangierkonfiguration, die **dadurch gekennzeichnet ist, dass** der erste Wagen (11) von dem bestimmten Tunnel zu einem Zieltunnel gemäß der Querrichtung (Y) verschiebbar ist;
wobei das System ferner **dadurch gekennzeichnet ist, dass** der Multitunnel-Rangiermechanismus (61) Folgendes aufweist:
- im Wesentlichen horizontale Multitunnel-Querschienen (70A, 70B), die sich gegenüberliegen und sich gemäß der Querrichtung (Y) zwischen mindestens dem bestimmten Tunnel und dem Zieltunnel erstrecken; und
- einen Multitunnel-Rangierwagen (62), der eingerichtet ist, um mit dem ersten Wagen (11) gekoppelt zu werden und über Multitunnel-Querschienen (70A, 70B) in dem Multitunnel-Übergabebereich (60) verschiebbar zu sein;
und dadurch, dass:
- die beiden Längsschienen (4A, 4B) in dem Bereich des Multitunnel-Übergabebereichs (60) diskontinuierlich sind, so dass zwei unterbrochene Abschnitte gebildet werden, die auf beiden Seiten des Multitunnel-Übergabebereichs (60) definiert sind; und
- der Multitunnel-Rangierwagen (62) zwei gegenüberliegende längsverlaufende Rangierwagen-Schienenabschnitte (63A, 63B) aufweist, die sich jeweils in dem zugeordneten unterbrochenen Abschnitt positionieren.

2. System nach Anspruch 1, wobei:
- die im Wesentlichen horizontalen und gegenüberliegenden Längsschienen (4A, 4B) an jedem der beiden vertikalen Pfosten der Bögen (3) jedes Tunnels (1A, 1B, 1C, 1D) in einer definierten Höhe befestigt sind; und
- die Multitunnel-Querschienen (70A, 70B) oberhalb der Längsschienen (4A, 4B) in einer bestimmten Höhe so befestigt sind, dass die Bewegung des ersten Wagens (11) auf den Längsschienen (4A, 4B) ermöglicht wird.

3. System nach Anspruch 1 oder 2, wobei der Multitunnel-Rangierwagen (62) eine motorisierte Rangierwagen-Anordnung (64) aufweist, die geeignet ist, den Multitunnel-Rangierwagen (62) auf den Multitunnel-Querschienen (70A, 70B) zu bewegen.

4. System nach Anspruch 3, wobei die motorisierte Rangierwagen-Anordnung (64) auf jeder Seite des Multitunnel-Rangierwagens (62) gemäß der Querachse (Y) zwei Verbindungsplatten mit Rollen (69A, 69B) aufweist, um den Multitunnel-Rangierwagen (62) an den Multitunnel-Querschienen (70A, 70B) zu koppeln und ihn bei der Bewegung gemäß der Querrichtung (Y) zu führen.

5. System nach Anspruch 4, wobei jede Multitunnel-Querschiene (70A, 70B) ein Profil aufweist, das sich horizontal erstreckt und einen Hohlraum definiert, der eine Öffnung aufweist, die in einer Wand in dem unteren Teil und über ihre gesamte Länge positioniert ist, wobei die Öffnung eine geringere Breite als die Breite des Profils aufweist, um in der Wand in dem unteren Teil mindestens einen Absatz (72A, 72B) auszubilden, der als Auflagefläche für die Rollen jeder der Verbindungsplatten mit Rollen (69A, 69B) dient, wobei die Verbindungsplatten mit Rollen (69A, 69B) eine Anordnung innerer Rollen (73) aufweisen, die sich auf der Auflagefläche des Absatzes in dem Hohlraum des Profils bewegen, und eine Anordnung äußerer Rollen (74), die sich auf der Auflagefläche des Absatzes außen unterhalb des Profils so bewegen, dass der Multitunnel-Rangierwagen (62) bei einer Bewegung gemäß der Querrichtung (Y) gestützt und geführt wird.

6. System nach einem der Ansprüche 3 bis 5, wobei die motorisierte Rangierwagen-Anordnung (64) mindestens eine Einheit aus Servomotor und Rangiergetriebe (66A) aufweist, die an Zahnräder (67A, 67B) in distaler Position durch zugeordnete Wellen (68A, 68B) gekoppelt ist, wobei jede der Multitunnel-Querschienen (70A, 70B) mit einer Querschienen-Zahnstange (71A, 71B) versehen ist, wobei die Zahnräder (67A, 67B) eingerichtet sind, um in die entsprechende Querschienen-Zahnstange (71A, 71B) einzugreifen.

7. System nach Anspruch 6, wobei die motorisierte Rangierwagen-Anordnung (64) zwei Einheiten aus Servomotor und Rangiergetriebe aufweist, eine (66A) auf einer Seite, die von dem längsverlaufenden Rangierwagen-Schienenabschnitt (63A) gestützt wird, die andere (66B) auf der anderen Seite, die von dem gegenüberliegenden längsverlaufenden Rangierwagen-Schienenabschnitt (63B) gestützt wird, wobei die beiden Einheiten aus Servomotor und Rangiergetriebe (66A, 66B) synchronisiert sind.

8. System nach einem der Ansprüche 1 bis 7, wobei jede der Längsschienen (4A, 4B), der längsverlaufenden Rangierwagen-Schienenabschnitte (63A, 63B) und/oder der Multitunnel-Querschienen (70A, 70B) in Form eines Profils ausgebildet sind, das einen Hohlraum definiert, der eine Stromversorgungs- und Datenkommunikationsanordnung (80) aufweist, die mit mindestens einer Leiterbahn (81A, 81B) versehen ist, die eingerichtet, um mit mindestens einer Kohle (82) zusammenzuwirken, die von einer Versorgungs- und Kommunikationseinheit (83) des ersten Wagens (11), des zweiten Wagens (12) und/oder des Multitunnel-Rangierwagens (62) getragen wird.

9. System nach einem der Ansprüche 1 bis 8, wobei mindestens ein längsverlaufender Rangierwagen-Schienenabschnitt (63A, 63B) einen versenkbaren Anschlagmechanismus (90) aufweist, der eine Anschlagplatte (91) aufweist, die an der Schiene mittels einer Drehachse und mittels einer Feder (92) befestigt ist, und einen Zylinder (93), der mit einem Finger (95) versehen ist, der mit einem vorstehenden unteren Teil (94) der Platte (91) zusammenwirkt, um die Bewegung des ersten Wagens (11) von den längsverlaufenden Rangierwagen-Schienenabschnitten (63A, 63B) zu den Längsschienen (4A, 4B) zu blockieren oder zu gestatten.

10. System nach einem der Ansprüche 1 bis 8, wobei mindestens ein längsverlaufender Rangierwagen-Schienenabschnitt (63A, 63B) einen versenkbaren Anschlag- und Zentriermechanismus (90A) aufweist, der eine Anschlagplatte (91) aufweist, die an der Schiene mittels einer Drehachse und mittels einer Feder (92) befestigt ist, und einen Zylinder (93), der mit einem Finger (95) versehen ist, der einerseits mit einem vorstehenden unteren Teil (94) der Platte (91) zusammenwirkt, um die Bewegung des ersten Wagens (11) von den längsverlaufenden Rangierwagen-Schienenabschnitten (63A, 63B) zu den Längsschienen (4A, 4B) zu blockieren oder zu gestatten, und andererseits über eine Gleitschiene (96) läuft, die mit dem längsverlaufenden Rangierwagen-Schienenabschnitt (63A, 63B) verbunden ist, und eine mit dem Längsschienenabschnitt (4A, 4B) verbundene Zentrieraufnahme (97), um die Rangierwagen-Längsschienen (63A, 63B) und die Längsschienen (4A, 4B) aneinander auszurichten.

11. System nach Anspruch 9 oder 10, wobei der versenkbare Anschlagmechanismus (90) beziehungsweise der kombinierte versenkbare Anschlag- und Zentriermechanismus (90A) einen Aufprallanschlag (98) aufweist, der mittels einer zweiten Drehachse und mit dem Finger (95) an dem längsverlaufenden Rangierwagen-Schienenabschnitt (63A, 63B) befestigt ist, wobei der Aufprallanschlag (98) mit einem an dem ersten Wagen (11) befestigten Aufpralldämpfer (99) zusammenwirkt.

12. System nach Anspruch 10, wobei mindestens ein längsverlaufender Rangierwagen-Schienenabschnitt (63A; 63B) einen Ausrichtungsmechanismus (100) durch Translation aufweist, der eine horizontale Achse (101) aufweist, die in einem Gleitstück (102) aufgenommen ist, wobei die Achse (101) und das Gleitstück (102) über zwei seitliche horizontale Federn (103A, 103B) aneinander gekoppelt sind, damit der längsverlaufende Rangierwagen-Schienenabschnitt (63A; 63B) relativ zu der entsprechenden Längsschiene (4A; 4B) horizontal translatorisch schwebt, wenn der Finger (95) in die Zentrieraufnahme (97) des versenkbaren Anschlag- und Zentriermechanismus (90A) eingreift.

13. Verfahren zum Betrieb eines landwirtschaftlichen robotischen Portalsystems (10) nach einem der Ansprüche 1 bis 12 in einem Gewächshaus (1), das mehrere benachbarte Tunnel (1A, 1B, 1C, 1D) umfasst, umfassend die Schritte:
- Lenken eines ersten Wagens (11) eines robotischen Portals (10) zu einem Multitunnel-Übergabebereich (60) in einem bestimmten Tunnel, wobei der erste Wagen (11) gemäß einer Längsrichtung (X) bewegbar ist;
- Koppeln des ersten Wagens (11) an einen Multitunnel-Rangierwagen (62) in dem Multitunnel-Übergabebereich (60);
- Lenken des Multitunnel-Rangierwagens (62), der den ersten Wagen (11) aus dem bestimmten Tunnel zu einem Zieltunnel transportiert, wobei der Multitunnel-Rangierwagen (62) gemäß der Querrichtung (Y) entlang der Multitunnel-Querschienen (70A, 70B) verschiebbar ist;
- Stoppen des Multitunnel-Rangierwagens (62) in dem Zieltunnel und Entkoppeln des ersten Wagens (11) von dem Multitunnel-Rangierwagen (62); und
- Bewegen des ersten Wagens (11) in den Zieltunnel, um dort die vorgesehene(n) Gartenbauarbeit(en) durchzuführen.

## Claims

1. An agricultural robotic gantry system (10) for a greenhouse (1) comprising several adjacent chapels (1A, 1B, 1C, 1D) comprising :
- a first carriage (11) movable along longitudinal rails (4A, 4B) in a longitudinal direction (X), the first carriage (11) supporting and laterally guiding in a transverse direction (Y) a second carriage (12) provided with a tool carrier (20) for implementing a tool (30) relative to a cultivation surface (RM), each chapel supporting two longitudinal rails (4A, 4B) substantially horizontal and facing each other, said chapels and said longitudinal rails extending in a longitudinal direction (X) ;
- an inter-chapel switching mechanism (61) positioned in an inter-chapel transfer zone (60) extending between the chapels (1A, 1B, 1C, 1D) in the transverse direction (Y), the inter-chapel switching mechanism (61) being arranged such that the first carriage (11) is operable either in a working configuration in which the first carriage (11) is movable in a defined chapel in the longitudinal direction (X), or in a switching configuration which is **characterized in that** the first carriage (11) is translatable from said defined chapel towards a destination chapel in the transverse direction (Y) ;
the system is further **characterized in that** the inter-chapel switching mechanism (61) comprises :
- inter-chapel transverse rails (70A, 70B) substantially horizontal, facing each other and extending in the transverse direction (Y) between at least said defined chapel and said destination chapel ; and
- an inter-chapel switching carriage (62) arranged to couple to the first carriage (11) and translatable in the inter-chapel transfer zone (60) via the inter-chapel transverse rails (70A, 70B) ;
and **in that**:
- the two longitudinal rails (4A, 4B) are discontinuous at the level of the inter-chapel transfer zone (60) so as to form two interrupted sections defined on either side of the inter-chapel transfer zone (60) ; and
- the inter-chapel switching carriage (62) comprises two sections of longitudinal switching carriage rails (63A, 63B) facing each other, each positioned in the associated interrupted section.

2. The system of claim 1, wherein :
- the longitudinal rails (4A, 4B) substantially horizontal and facing each other are fixed on each of the two vertical uprights of the arches (3) of each chapel (1A, 1B, 1C, 1D) at a defined height ; and
- the inter-chapel transverse rails (70A, 70B) are fixed above the longitudinal rails (4A, 4B) at a determined height so as to allow the movement of the first carriage (11) on the longitudinal rails (4A, 4B).

3. The system of claim 1 or 2, wherein the inter-chapel switching carriage (62) comprises a switching carriage motorized assembly (64) capable of moving the inter-chapel switching carriage (62) on the inter-chapel transverse rails (70A, 70B).

4. The system of claim 3, wherein the switching carriage motorized assembly (64) comprises, on each side of the inter-chapel switching carriage (62) along the transverse axis (Y), two roller connection plates (69A, 69B) for coupling the inter-chapel switching carriage (62) to the inter-chapel transverse rails (70A, 70B) and guiding it during movement in the transverse direction (Y).

5. The system of claim 4, wherein each inter-chapel transverse rail (70A, 70 B) has a profile extending horizontally and defining a cavity having an opening positioned in a wall in a lower part and over its entire length, the opening having a width smaller than the width of the profile in order to provide in the wall in the lower part at least one shoulder (72A, 72B) serving as a bearing surface for the rollers of each of the roller connection plates (69A, 69B), said roller connection plates (69A, 69B) comprising a set of internal rollers (73) moving on the bearing surface of the shoulder in the cavity of the profile and a set of external rollers (74) moving on the bearing surface of the shoulder externally below the profile so that the inter-chapel switching carriage (62) is supported and guided during a movement in the transverse direction (Y).

6. The system according to anyone of claims 3 to 5, wherein the switching carriage motorized assembly (64) comprises at least one servomotor and switching reducer unit (66A) coupled to pinions (67A, 67B) in the distal position by associated shafts (68A, 68B), each of the inter-chapel transverse rails (70A, 70B) being provided with a transverse rail rack (71A, 71B), said pinions (67A, 67B) being arranged to mesh with the corresponding transverse rail rack (71A, 71B).

7. The system of claim 6, wherein the switching carriage motorized assembly (64) comprises two servomotor and reducer units, one (66A) on one side supported by the longitudinal switching carriage rail section (63A), the other (66B) on the other side supported by the facing longitudinal switching carriage rail section (63B), the two servomotor and switching reducer units (66A, 66B) being synchronized.

8. The system according to anyone of claims 1 to 7, wherein each of the longitudinal rails (4A, 4B), longitudinal switching carriage rail sections (63A, 63B) and/or inter-chapel transverse rails (70A, 70B) are made in the form of a profile defining a cavity comprising a power supply and data communication assembly (80) provided with at least one conductive track (81A, 81B) arranged to cooperate with at least one carbon brush (82) supported by a power supply and communication unit (83) of the first carriage (11), the second carriage (12) and/or the inter-chapel switching carriage (62).

9. The system according to anyone of claims 1 to 8, wherein at least one longitudinal switching carriage rail section (63A, 63B) comprises a retractable stop mechanism (90) comprising a stop plate (91) fixed to said rail by a rotation axis and by a spring (92), and a jack (93) provided with a finger (95) which cooperates with a lower projecting part (94) of the plate (91) to block or authorize the movement of the first carriage (11) from the longitudinal switching carriage rail sections (63A, 63B) to the longitudinal rails (4A, 4B).

10. The system according to anyone of claims 1 to 8, wherein at least one longitudinal switching carriage rail section (63A, 63B) comprises a retractable stop and centering mechanism (90A) comprising a stop plate (91) fixed to said rail by a rotation axis and by a spring (92), and a jack (93) provided with a finger (95) which cooperates, on the one hand, with a lower projecting part (94) of the plate (91) for blocking or authorizing the movement of the first carriage (11) from the longitudinal switching carriage rail sections (63A, 63B) towards the longitudinal rails (4A, 4B), and, on the other hand, crossing a slide (96) linked to the longitudinal switching carriage rail section (63A, 63B) and a centering housing (97) linked to the longitudinal rail section (4A, 4B) for aligning the longitudinal switching carriage rail sections (63A, 63B) and the longitudinal rails (4A, 4B).

11. The system of claim 9 or 10, wherein the retractable stop mechanism (90), respectively the combined retractable stop and centering mechanism (90A) comprises an impact stop (98) fixed to the longitudinal switching carriage rail section (63A, 63B) by a second rotation axis and by said finger (95), the impact stop (98) cooperating with an impact damper (99) fixed on the first carriage (11).

12. The system of claim 10, wherein at least one longitudinal switching carriage rail section (63A; 63B) comprises a translation alignment mechanism (100) comprising a horizontal axis (101) received in a slide part (102), said axis (101) and said slide part (102) being coupled together via two lateral horizontal springs (103A, 103B) in order to make said longitudinal switching carriage rail (63A; 63B) floating in horizontal translation relative to the corresponding longitudinal rail (4A; 4B) when the finger (95) enters the centering housing (97) of the retractable stop and centering mechanism (90A).

13. A method of operating an agricultural robotic gantry system (10) according to anyone of claims 1 to 12, in a greenhouse (1) comprising several adjacent chapels (1A, 1B, 1C, 1D) comprising the steps :
- steering a first carriage (11) of a robotic gantry (10) towards an inter-chapel transfer zone (60) in a defined chapel, the first carriage (11) being movable in a longitudinal direction (X) ;
- coupling the first carriage (11) to an inter-chapel switching carriage (62) in the inter-chapel transfer zone (60) ;
- steering the inter-chapel switching carriage (62) transporting the first carriage (11) from the defined chapel towards a destination chapel, the inter-chapel switching carriage (62) being translatable in the transverse direction (Y) along inter-chapel transverse rails (70A, 70B) ;
- stopping the inter-chapel switching carriage (62) in the destination chapel and decoupling the first carriage (11) from the inter-chapel switching carriage (62) ; and
- moving the first carriage (11) into the destination chapel to carry out the planned market gardening task(s).
